# EUROPEAN PATENT SPECIFICATION

(11) **EP 0 855 240 B1**
(45) Date of publication and mention of the grant of the patent: **07.04.2004**
(21) Application number: 98101314.7
(22) Date of filing: 26.01.1998
(51) Int. Cl.: B23K 9/127

(54) **Apparatus and method for one side welding of curved steel plates**
Verfahren und Vorrichtung zum einseitigen Schweissen von aus Stahl hergestellten gewölbten Werkstücken
Méthode et appareil pour souder d'un côté des tôles d'acier courbes

(30) Priority: 27.01.1997 JP 1268297
(43) Date of publication of application: 29.07.1998
(73) Proprietor: Nippon Steel Welding Products & Engineering Co., Ltd., Tokyo (JP); Universal Shipbuilding Corporation, Tokyo (JP)
(72) Inventor: Hoashi, Kaoru, Nittestsu Yohsetsu Kohgyo K.K., Narashino-shi, Chiba-ken (JP); Wada, Tatsuroh, Nittetsu Yohsetsu Kohgyo K.K., Narashino-shi, Chiba-ken (JP); Maruyama, Nobuyuki, Nittetsu Yohsetsu Kohgyo K.K., Narashino-shi, Chiba-ken (JP); Miyazaki, Tatsuo, Konohana-ku, Osaka-shi, Osaka, 554 (JP); Nakashima, Yoshio, Konohana-ku, Osaka-shi, Osaka, 554 (JP); Ueda, Takayoshi, Konohana-ku, Osaka-shi, Osaka, 554 (JP); Nagatomo, Kazuo, Nittetsu Yohsetsu Kohgyo K.K., Chuo-ku, Tokyo (JP); Yamashita, Kozo, Nittetsu Yohsetsu Kohgyo K.K., Chuo-ku, Tokyo (JP)
(74) Representative: Pellmann, Hans-Bernd, Dipl.-Ing.

(56) References cited:
- DE-A- 3 502 631
- DE-A- 3 935 053
- FR-A- 2 613 265
- JP-A- 3 294 092
- JP-A- 7 328 795
- JP-A- 8 099 192
- JP-A- 54 071 745
- JP-A- 56 030 076
- JP-A- 59 127 995
- US-A- 4 255 643
- US-A- 4 577 499
- PATENT ABSTRACTS OF JAPAN vol. 10, no. 326, 6 November 1986 & JP 61 132296 A (KOBE STEEL LTD), 19 June 1986,
- PATENT ABSTRACTS OF JAPAN vol. 14, no. 501 (M-1043), 2 November 1990 & JP 02 207996 A (NIPPON STEEL CORP.), 17 August 1990,

## Description

### FIELD OF THE INVENTION

The invention relates to an apparatus for a three-dimensional trace welding of a groove formed between curved members to be welded and a high efficiency double electrode one side gas-shielded arc welding process which uses the apparatus mentioned to form a welded bead of high toughness, good crack resistance and bead appearance while reducing the generation of spatter during the welding operation. In particular, while not intended to be limited thereto, the invention relates to a one side welding of curved steel panels, disposed in abutment against each other, as applied in a shell plating of a hull at the stem or stern thereof.

### PRIOR ART

In the art of ship building, several steel panels, each measuring 15 m × 20 m, which are disposed in abutment against each other are subject to a one side welding process to manufacture a shell plating of a hull. When steel panels are welded together which are applied to a region where they assume a curved configuration subsequent to the welding operation such as the shell plating at the stem or stern, the panels are disposed in abutment against each other while they are supported from below by hydraulic jacks so that a desired curvature of the panels can be maintained, and areas of abutment or grooves are welded together from above. In this instance, the groove extends along the curved surface of the shell plating being formed, and exhibits a three-dimensional curvature. A welding of such a groove is often achieved by a manual operation in the prior practice since an automatic welding system which premises an operation on a rectilinear groove cannot be used.

A manual welding operation for a groove having a three-dimensional curvature is a time and space consuming operation for scaffolding for workers and for laying welding instruments, and requires an increased length of time than when welding a rectilinear groove, and thus the productivity of the welding operation is reduced. Welding quality is susceptible to variation depending on the degree of curvature of the groove and the varying levels of skills of welding workers, requiring a post-treatment and thus increasing the welding cost.

A process achieving an automation of welding in the art of shipbuilding other than manufacturing the shell plating of a hull is known from DE-A-35 02 631. This document discloses an apparatus for one side welding horizontal fillet welds in multisided framework constructions comprising a curved double bottom which is open at the topside and a plurality of straight longitudinal and transverse girders. The apparatus comprises means for moving a welding torch in the X, Y and Z directions as well as means for turning the welding torch about the vertical Z axis. Further, the apparatus is provided with sensors for detecting the distance to the double bottom and the longitudinal and transverse girders defining the fillet welds to be welded so as to determine the position of the welding torch and to guide the welding torch along the fillet welds.

The application of the gas-shielded arc welding process is rapidly increasing in the various fields recently because it allows a reduction in the welding cost and a higher efficiency in building a variety of welded structures. In particular, this application is notable in the fields of ship building and bridge construction which involve a high proportion of using the butt welding. However, there remains a task of increasing the speed of one side welding for short to increased length applications in view of reducing the total welding cost.

Among one side welding processes, the submerged arc welding process has been the subject of intensive research efforts to be used as plate joining welding in the field of ship building. By way of example, Japanese Patent Publication No. 59,072/1985 discloses a submerged arc welding process which is specifically intended to prevent a reduction in the welding bead penetration depth and a degradation in the bead appearance as electrodes oscillate, together with preventing the occurrence of cracks in the initial tier bead. However, the disclosed process requires an elaborate equipment to implement, which is intricate enough to prevent its application to short length welding.

Japanese Patent Publication No. 49,027/1986 discloses a gas-shielded downhand welding process using a flux-cored wire and a high current density in which a composited wire of a reduced diameter is used with an increased projection length to perform a downhand welding with a high current and at a high welding speed efficiently, thus reducing the welding cost. However, the wire projection length is as long as 35-70 mm, and this causes problems such as a shield failure, an offset of a target position due to curling tendency of wire or cracks in the initial tier bead during the one side welding.

Japanese Patent Publication No. 7,543/1975 discloses filling a groove abutted by a backing with a suitable amount of steel particle or iron powder to perform the welding with a wire of a reduced diameter which is maintained in oscillation. However, this technique fails to achieve a good welding without a clearance for the groove, and an increased angle of the groove results in an increased cross-sectional area of the groove, which affects the efficiency of the plate joining operation.

Further, the US Patent No. 4,255,643 discloses a welding machine according to the preamble of claim 1, including a programming device to move a welding head relative to main X, Y and Z axes, and to rotate the head about a vertical axis. A sensor probe is connected to rotate with the welding head on a rotator base. Horizontal and vertical deviations from the programmed path which may occur in the weld groove are sensed by the sensor probe, which in turn causes the weld head to move from its programmed path to a desired corrected path, when needed.

### SUMMARY OF THE INVENTION

The object of the invention is to provide an apparatus allowing an automation of welding operation for a groove having a three-dimensional curvature with high productivity, high quality and low cost.

In accordance with the invention, an apparatus for one side welding as set forth in claim 1 is provided.

In the following, in order to facilitate understanding the invention, elements or parts corresponding to those appearing in an embodiment shown in the drawings and to be described later are designated by reference numerals and characters in parentheses which are used in the embodiment.

With the described arrangement, a position of the base (2) in three dimensions (X, Y, Z) can be defined or regulated by a combination of the X travelling carriage (RY) which travels in the horizontal direction X, the Y travelling carriage (4) which travels in the direction Y and the Z elevating mechanism (12). If the base (2) is used to support the welding torch, the welding torch (or the base) can be driven so as to follow the three-dimensional distribution of the groove, but it is possible that the attitude of the welding torch with respect to the groove may be offset from a reference attitude as a result of a curvature of the groove. The welding apparatus of the invention is provided with the θ turning mechanism (10) which drives the base (2) for turning motion about the vertical axis Z (0), thus allowing the welding torch to be turned so that it is maintained in the reference attitude with respect to the groove.

In addition, in accordance with the invention, an angle of bending, θ', in a direction transverse to the direction in which a groove (b) between members (W1, W2) to be welded together extends and an angle of inclination, α, of the direction in which the groove extends with respect to the horizontal plane can be calculated from detection values from the first and the second detecting means (P3, P2), causing the base (2) to be driven for turning motion in accordance with θ' and causing the Z elevating mechanism (12) to drive the base (2) for elevating motion in accordance with α. This enables a welding operation to be realized in which the welding torch traces the angles of bending θ' (in the turning direction) and the angle of inclination α in the fore-and-aft direction by an automatic curved surface profiling operation.

In a preferred embodiment of the invention, there are also provided a torch support frame (3) mounted on the base (2) so as to be rotatable about the horizontal axis X and carrying the welding torch (30L, 30T), and a γ rotating mechanism including a second rotation motor (M7) which drives the torch support frame (3) for rotation about a horizontal shaft (31a) in response to a γ energization command. With this arrangement, the torch support frame (3) can be driven for rotation by the γ rotating mechanism in a manner corresponding to the angle of inclination α in the fore-and-aft direction, thus maintaining an angle γ formed by the torch with respect to the members (W1, W2) to be welded together, as viewed in the fore-and-aft direction, substantially constant irrespective from the angle of bending of the members to be welded in the fore-and-aft direction.

The torch support frame (3) supports the welding torch (30L, 30T) in a manner to be movable toward and away from the members to be welded (W1, W2), and the welding apparatus additionally comprises a torch up/down mechanism including torch up/down motors (M8, M10) which drive the welding torch (30L, 30T) to move toward or away in response to a move toward/away energization command. With this arrangement, the welding torch (30L, 30T) can be driven by the torch up/down mechanism to move toward or away in a manner corresponding to the angle of inclination α, allowing the welding torch to be maintained at a fixed distance with respect to the groove.

The torch support frame (3) supports the welding torch (30L, 30T) in a reciprocable manner with respect to the members to be welded (W1, W2) in a direction orthogonal to a longitudinal line joining the first and the second detecting means (P3, P2) together. The welding apparatus additionally comprises third and fourth detecting means (P5, P4) both supported by the base (2) and spaced apart in the direction orthogonal to the longitudinal line for detecting a Z-position of the surface of a first member (W1) and a second member (W2), respectively, which are to be welded together and which define a groove therebetween, and an oscillating mechanism including oscillation motors (M9, M11) which drive the welding torch for reciprocating motion in response to an oscillating energization command. With this arrangement, an angle of inclination β of the member with respect to the horizontal plane, as viewed in the direction orthogonal to the direction in which the grove (b) extends, can be calculated from the detection values from the third and fourth detecting means (P5, P4), causing a center of excursion of the oscillatory reciprocating motion which the welding torch (30L, 30T) undergoes as driven by the oscillating mechanism (M9, M11) to be displaced in a manner corresponding to the angle of inclination β so that the center of excursion is brought into alignment with or traces the center of the groove.

In the preferred embodiment of the invention, there is also provided control means (8), which is operative
to calculate the angle of bending θ' of the groove (b) between the members (W1, W2) to be welded in the direction transverse to the direction in which the groove extends and the angle of inclination α of the direction in which the groove extends with respect to the horizontal plane from detection values from the first and the second detecting means (P3, P2);
to calculate the angle of inclination β of the members to be welded with respect to the horizontal plane, as viewed in the direction orthogonal to the direction in which the groove (b) extends, from detection values from the third and the fourth detecting means (P5, P4);
to cause the θ turning mechanism (10) to turn the base (2) in a manner corresponding to the angle of bending θ';
to cause the Z elevating mechanism (12) to elevate the base (2) in a manner corresponding to the angle of inclination α;
to cause the γ rotating mechanism (M7) to rotate the torch support frame (3) in a manner corresponding to the angle of inclination α;
to cause the torch up/down mechanism (M8, M10) to move the welding torch toward or away from the members in a manner corresponding to the angle of inclination α;
and to cause the oscillating mechanism (M9, M11) to displace the center of excursion of the oscillatory reciprocating motion of the welding torch (30L, 30T) in a manner corresponding to the angle of inclination β.

With this arrangement, the welding torch (30L, 30T) traces or profiles the angle of bending θ' (in the turning direction) and the angle of inclination α in the fore-and-aft direction of the groove, whereby the angle γ as viewed in the fore-and-aft direction which the torch forms with respect to the members to be welded (W1, W2) is maintained substantially constant irrespective of the angle of bending (α) of the members in the fore-and-aft direction, and the welding torch (30L, 30T) moves toward or away from the groove in a manner corresponding to the angle of inclination α to be maintained at a fixed distance from the groove, and the center of excursion of the oscillatory reciprocating motion which the welding torch (30L,30T) undergoes under the action of the oscillating mechanism (M9, M11) in a manner corresponding to the angle of inclination β traces or profiles the center of the groove. In other words, an automatic curved surface profiling welding operation is realized.

Accordingly, the need for securing the scaffold for workers and for laying welding instruments, which have been required to effect a manual welding operation for a groove having a three-dimensional curvature, is eliminated, thus achieving savings in the time and space requirements. This also reduces a variation in the welding quality which occurred depending on the curvature of the groove and the varying levels of skills of welding workers, and reduces the time and labor for the post-treatment. Consequently, the welding cost is reduced.

In accordance with the invention, there is further provided a method of one side welding a groove formed between curved steel plates as set forth in claim 8 which uses a one side welding apparatus as described above.

In a preferred embodiment, the follower welding electrode wire is a flux-cored wire comprising, in a weight percentage with respect to the total wire weight,
from 2.5 to 7.0 % of TiO₂,
from 0.4 to 1.0 % of ZrO₂,
from 0.1 to 1.0 % of Al₂O₃
from 0.2 to 1.2 % of Si,
from 1.0 to 4.0 % Mn, and
from 0.1 to 1.0 % of Mg,
and additionally comprising one or more of Na and K in a total amount from 0.03 to 0.3 %.

In the preferred embodiment, the follower welding electrode wire may additionally comprise, in weight percentage with respect to the total wire weight,
from 0.3 to 3.0 % of Ni,
from 0.02 to 0.2 % of Ti, and
from 0.002 to 0.015 % of B.

In the preferred embodiment, at least the leader electrode wire is double shielded with a first and a second shielding gas.

Other objects and features of the invention will become apparent from the following description of an embodiment thereof with reference to the drawings.

### BRIEF DESCRIPTION OF THE DRAWINGS

Fig. 1 is a perspective view of a welding apparatus 1 according to one embodiment of the invention, as viewed from top to one side, with mechanisms and elements being shown schematically;
Fig. 2 is a perspective view, partly in section, of the welding apparatus 1 shown in Fig. 1 as viewed in a direction indicated by an arrow 2A shown in single dot broken lines shown in Fig. 1;
Fig. 3 is a front view, partly in section, of the welding apparatus 1 shown in Fig. 1, as viewed in the direction of an arrow 3A shown in single dot broken lines in Fig. 1;
Fig. 4 is a side elevation to a reduced scale, equivalent to Fig. 2, schematically illustrating the electric motors driving various mechanisms and general positions of potentiometers P1-P5, and P7 and rotary encoder P6 which operate as sensors;
Fig. 5 is an illustration of an angle of inclination β in the lateral direction of works shown in Fig. 3 and a required offset dxβ for the center of oscillation, with works W1 and W2 being shown in section which is transverse to the groove;
Fig. 6 is a perspective view of the works W1 and W2 shown in Fig. 1, indicating directions in which the potentiometers P2-P5 shown in Fig. 4 detect the works W1 and W2;
Fig. 7 is a plan view indicating the positional relationship between a travelling direction and a travelling speed (welding speed) V of the sensor base 2 shown in Fig. 1 and the groove line b;
Fig. 8 is a perspective view generally illustrating the works W1 and W2 shown in Fig. 1;
Fig. 9 is a flowchart or main routine of a control operation performed by a control circuit 8 shown in Fig. 3;
Fig. 10 is a flowchart of a "welding" subroutine which takes place at step 4 shown in Fig. 9;
Fig. 11 is a longitudinal section to an enlarged scale of a double shield 20 which is equipped within a welding torch 30L shown in Fig. 2;
Fig. 12a is a front view to an enlarged scale of a V-shaped groove formed between welded members W1 and W2 shown in Fig. 1;
Fig. 12b is a front view to an enlarged scale of a Y-shaped groove formed between welded members W1 and W2;
Fig. 13 graphically shows a distribution of combinations of plate thickness and elevation of steel grain dispersion when the groove formed between welded members having several thicknesses are welded under the welding condition indicated in Table 3 with points of combinations being marked by symbols indicating the quality of sealing beads;
Fig. 14 is a side elevation of the welding apparatus 1 shown in Fig. 2, illustrating an inter-electrode distance Dw between a leader electrode wire wa1 and a follower electrode wire wa2; and
Fig. 15 graphically shows the amount of spatters generated which is plotted against the welding current, the single shield being employed in the conventional process shown.

### DESCRIPTION OF THE PREFERRED EMBODIMENT

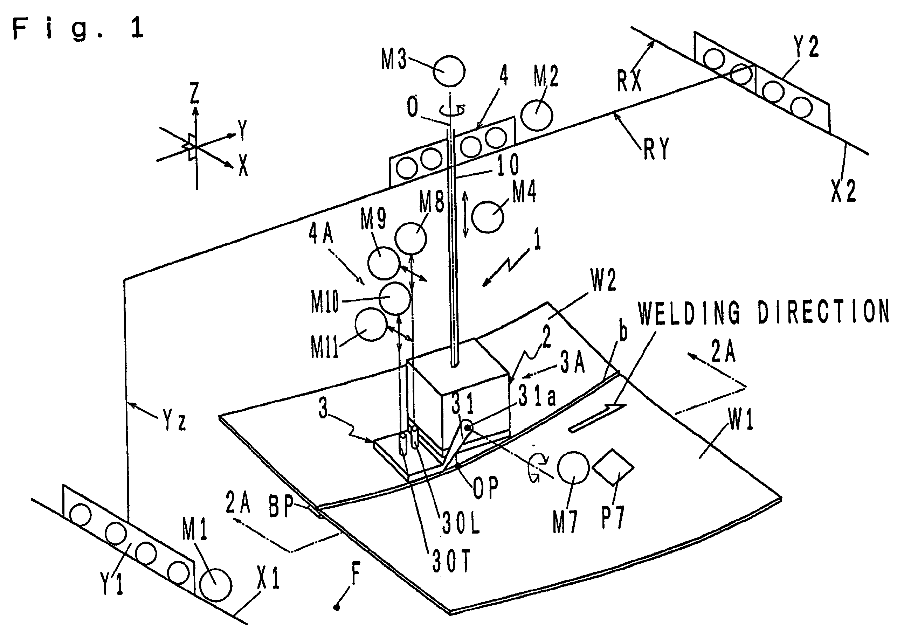

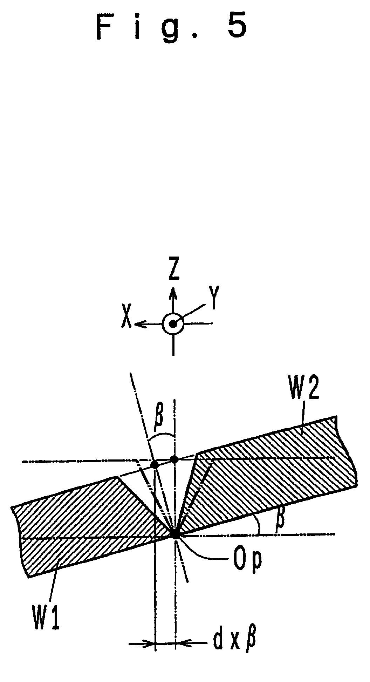

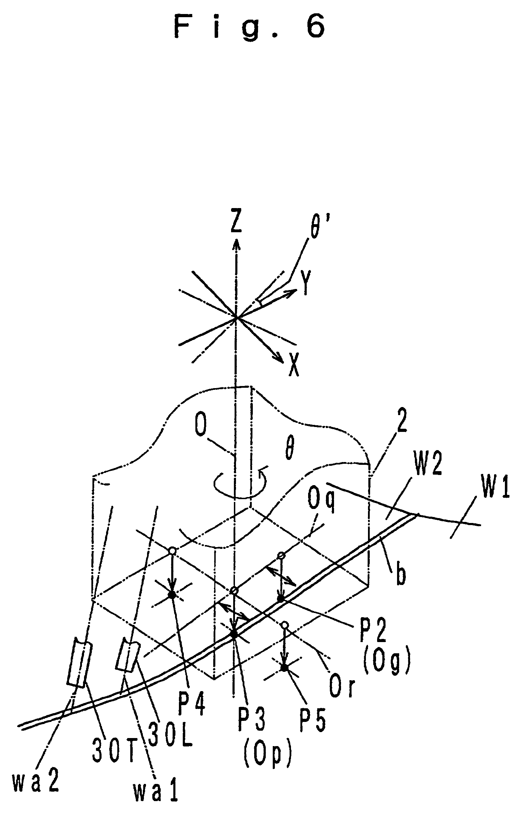

Referring to Figs. 1, 2 and 3, a general arrangement of a one side gas-shielded arc welding apparatus according to an embodiment of the invention will be described. In Figs. 1 to 3, an arrow Z indicates an upward direction while the arrows X and Y represent a horizontal direction. In the description to follow, the direction indicated by the arrow Y is referred to as a forward direction, and the direction indicated by the arrow X will be referred to as the right direction. Fig. 1 is a schematic view generally showing a welding apparatus 1 in a manner of perspective, as viewed from top to one side. As shown in Figs. 5 and 6, works or members to be welded W1 and W2 are disposed so that their opposing edges are in abutment against each other and are supported from below by a plurality of hydraulic jacks, not shown, which are installed on a working floor F, each work assuming a desired curved configuration by adjusting the height of support provided by each jack. Thus, the works have a three-dimensional curvature. A groove b is formed between the abutting edges of the works W1 and W2, and as a result of the three-dimensional curvature of the works W1 and W2, the works exhibit an increased up-grade in the forward direction and to the left. To maintain such curved configuration, the inner edges of the groove are tack welded together.

In Fig. 1, an X direction rail X1 is laid on the floor F to extend in a horizontal direction X, and an X direction rail X2 is supported by supporting stanchions, not shown, to extend in a direction parallel to the rail X1 at a location spaced forwardly and above the rail X1, and thus spaced above the floor F. The pair of rails X1 and X2 defines an X rail pair RX. An X travelling carriage Y1 is carried on the rail X1 while an X travelling carriage Y2 is carried on the rail X2, the X travelling carriages Y1 and Y2 supporting stanchion Yz and Y direction rail RY. It will be seen that the supporting stanchion Yz and Y direction rail RY extend in orthogonal directions and continues integrally. The X travelling carriage Y1 has drive wheels, which are driven for rotation by a motor M1 mounted on the X travelling carriage Y1 through a reduction gearing, not shown. When the motor M1 is energized and the drive wheels of the X travelling carriage Y1 are driven for rotation to allow the X travelling carriage to run on the rail X1, the support stanchion Yz and the Y direction rail RY move to the left or right in X direction along the rails X1 and X2 while maintaining the parallel relationship with the Y axis.

The travelling carriage (Y travelling carriage) 4 of the welding apparatus 1 has wheels 4a-4d which are placed on the Y direction rail RY. The wheels 4a-4d of the carriage 4 have rotating shafts, on which sprocket wheels, not shown, are integrally and fixedly mounted and are in meshing engagement with a ring-shaped chain belt, not shown, which extends along the rail RY. The chain belt is driven for angular movement by a motor M2 which is mounted on the travelling carriage 4, whereby the travelling carriage 4 moves along the rail RY in the Y direction.

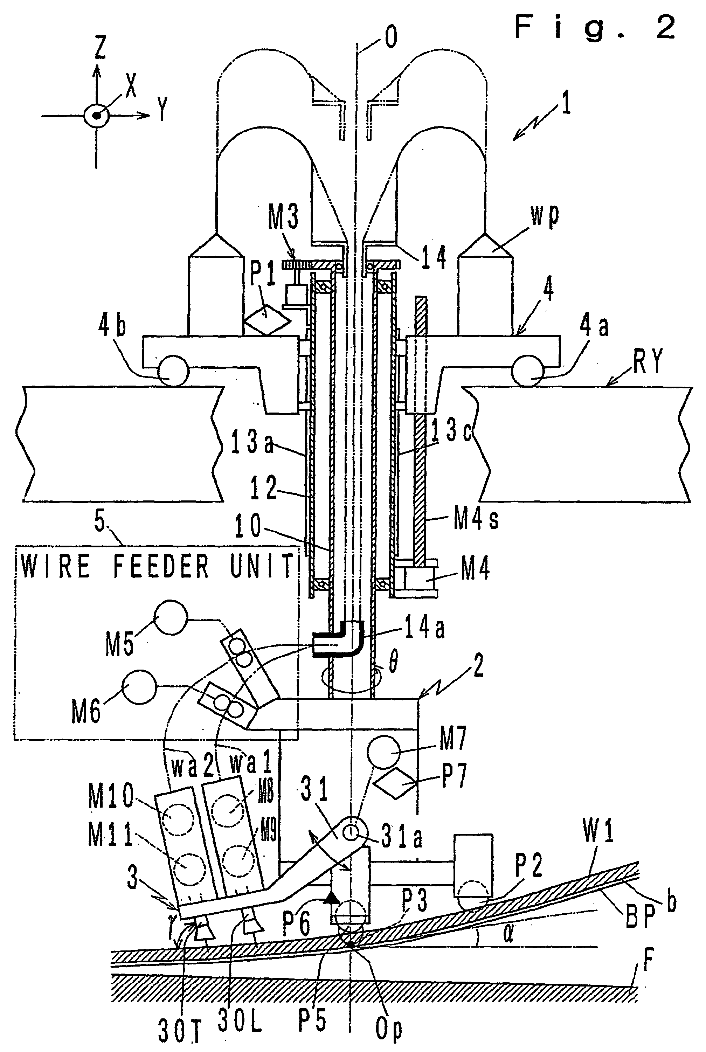

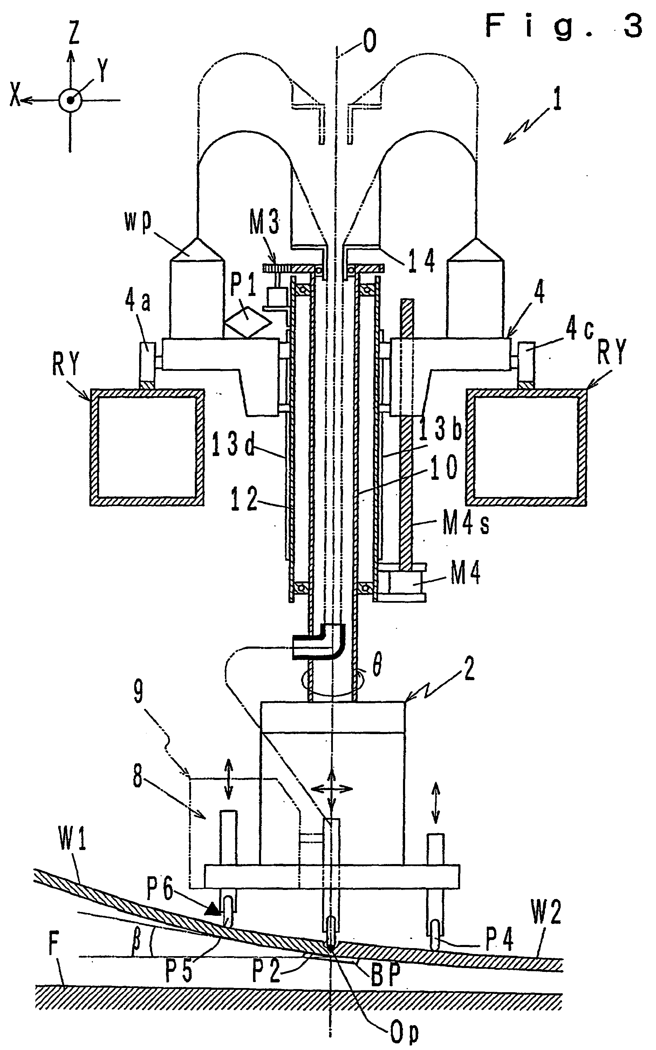

Fig. 2 shows the welding apparatus 1 as viewed in a direction indicated by an arrow 2A shown in single dot broken lines in Fig. 1 while Fig. 3 shows the welding apparatus 1 as viewed in a direction indicated by an arrow 3A shown in single dot broken lines in Fig. 1. The travelling carriage 4 is centrally formed with an opening which extends therethrough vertically, and through which a hollow columnar elevating pipe 12 extends so as to be elevatable in the Z direction. On its outer surface, the elevating pipe 12 has rails 13a-13c mounted thereon which extend in the Z direction and which are in fitting engagement with sliders which are mounted on the inner surface of the opening of the travelling carriage 4 so as to be elevatable in the Z direction. At its bottom, the outer wall of the elevating pipe 12 has an elevating motor M4 fixedly mounted thereon which drives a threaded rod M4s extending in the X direction. The travelling carriage 4 is formed with a threaded bore which extends therethrough in the Z direction and which is in threadable engagement with the threaded rod M4s. Since the travelling carriage 4 is supported from below by the Y rail RY, when the elevating motor M4 drives the threaded rod M4s for rotation, the elevating pipe 12 elevates in the Z direction relative to the travelling carriage 4.

A hollow turning shaft 10 which extends in the Z direction extends through the axis of the elevating pipe 12 and is rotatable in the horizontal plane. A rotation motor M3 is fixedly mounted on the outer wall of the elevating pipe 12 adjacent to an upper opening thereof which projects above the travelling carriage 4. A rotating shaft of the rotation motor M3 fixedly carries a spur gear which rotates in a horizontal plane and which is in meshing engagement with a spur gear which is integrally formed around the edge of the top opening of the turning shaft 10. When the motor M3 is energized, the spur gear which is integral with the rotating shaft thereof rotates and operates through the spur gear on the shaft 10 to cause it to rotate about a centerline O, representing the center of rotation, relative to the elevating pipe 12.

A sensor base 2 is carried by the lower end of the turning shaft 10, and rotates in a horizontal plane as the turning shaft 10 rotates. A rotating shaft of a potentiometer P1 is connected to the rotating shaft of the rotation motor M3, and the potentiometer P1 produces an electrical signal representing a turning angle θ of the turning shaft 10.

A first groove tracing roller is mounted on the bottom of the sensor base 2 in alignment with the centerline O, and is movable in a horizontal plane orthogonal to the centerline O (or in a direction perpendicular to the plane of the drawing in Fig. 2 and in X direction in Fig. 3) and also in the Z direction. A dual axis potentiometer P3 is coupled to the first groove tracing roller. The potentiometer P3 includes a potentiometer which detects a horizontal position of a support rod which rotatably supports the first groove tracing roller, and another potentiometer which detects the Z-position of the support rod, thus producing an electrical signal representing the horizontal position and the Z-position of the groove relative to the sensor base 2 (Fig. 2).

A second groove tracing roller is mounted on the bottom of the sensor base 2 at a location spaced by a given distance from the centerline O, and is movable in a horizontal plane (or in a direction perpendicular to the plane of the drawing in Fig. 2 and in X direction in Fig. 3) and also in the Z direction, and a dual axis potentiometer P2 is coupled to the second groove tracing roller. The potentiometer P2 also includes a potentiometer which detects the horizontal position of a support rod which rotatably supports the second groove tracing roller, and another potentiometer which detects the Z-position of the support rod, thus producing an electrical signal representing the horizontal position and the Z-position of the groove relative to the sensor base 2 (Fig. 2).

A difference between the horizontal positions detected by the potentiometers P3 and P2 corresponds to a bending (or skew angle) of the groove in the horizontal direction with respect to the sensor base 2 or more precisely, horizontal reference line thereof, and a difference between the Z-positions detected by the potentiometers P3 and P2 corresponds to an angle of inclination α of the groove line with respect to the horizontal plane, as viewed in the fore-and-aft direction (Fig. 2).

A first work tracing roller is mounted on the bottom of the sensor base 2 at a location which is spaced by a given distance from the centerline O in a direction orthogonal to a longitudinal line joining the first and the second groove tracing roller (P3, P2), and the Z-position of a support rod which rotatably carries this roller is detected by a potentiometer P5 as an electrical signal (see Fig. 3). A second work tracing roller is mounted on the bottom of the sensor base 2 at a location which is spaced by a given distance from the centerline in a direction orthogonal to the longitudinal line mentioned above and which is located opposite to the first work tracing roller with respect to the centerline O, and the Z-position of a support rod which rotatably carries this roller is detected by a potentiometer P4, as an electrical signal (see Fig. 3). A difference between the Z-positions detected by the potentiometers P5 and P4 corresponds to an angle of inclination β of the work with respect to the horizontal plane, as viewed in the lateral direction (see Fig. 3).

A rotary encoder P6 is coupled to the first work tracing roller (P5), and produces one pulse for each incremental angle of rotation of the roller (P5). By counting these pulses, a travel of the sensor base 2 along the groove is determined, and a count increment in a given time interval represents the travelling speed V of the sensor base 2 along the groove or the welding speed.

Referring to Fig. 2, a rotating shaft 31a extending in a direction along which the first and the second work tracing roller (P5, P4) are disposed or in a direction perpendicular to the plane of the drawing of Fig. 2 rotatably extends through substantially the center of the sensor base 2. The sensor base 2 carries a motor M7, an output shaft of which is connected to the rotating shaft 31a through a reduction gearing. When the motor M7 is energized, the rotation of the rotating shaft of the motor M7 is reduced by the reduction gearing before it is transmitted to the rotating shaft 31a. A torch support frame 3 is fixedly mounted on the rotating shaft 31a. As rotating shaft 31a rotates, the torch support frame 3 rotates about the rotating shaft 31a, whereby an angle γ formed by each of welding torches 30L, 30T carried by the frame 3 with respect to the work, as viewed in the fore-and-aft direction, changes. A potentiometer P7 produces an electrical signal representing an angle of rotation of the rotating shaft 31a.

The welding torch 30L is supported by the torch support frame 3 so as to be elevatable in the direction of depth of the groove and oscillatable in the direction of width of the groove through a move toward/away mechanism including a motor M8 which causes the torch to project or retract (or move toward/away) and an oscillating mechanism including an oscillate motor M9 which causes the torch to oscillate in the direction of the width of the groove. Similarly, the welding torch 30T is supported by the torch support frame 3 so as to be elevatable in the direction of depth of the groove and oscillatable in the direction of width of the groove through a move toward/away mechanism including a motor M10 which causes the torch to project or retract (or move toward/away) and an oscillating mechanism including an oscillate motor M11 which causes the torch to oscillate in the direction of the width of groove.

A wire feeder unit 5 is mounted on the sensor base 2 and comprises a pair of wire feeders and a pair of motors M5, M6 which drive these feeders. A pair of welding wires wa1, wa2 are fed from a wire pack wp mounted on the top of travelling carriage 4 through a pipe 14 extending through the axis of turning shaft 10 in the Z direction to the wire feeder unit 5 and through an outlet port 14a of the pipe 14, and after passing through the respective wire feeders, they are fed to the welding torches 30L, 30T, respectively.

Upon commencement of the welding operation, the motors M5, M6 drive the wire feeders, whereby the wires wa2, wa1 are fed from the wire pack wp to the welding torches 30T, 30L, respectively. The motor M8 associated with the welding torch 30L adjusts the projection length of the welding torch 30L or distance to the groove b to a given value, which is determined on the basis of an energization command from a control circuit to be described later. The motor M9 drives the welding torch 30L for oscillation at a rate corresponding to the welding speed V. The motor 10 associated with the welding torch 30T adjusts the projection length of the welding torch 30T or a distance to the groove b to a given value, which is determined on the basis of an energization command from a control circuit to be described later, and the motor M11 drives the welding torch 30 T for oscillation at a rate corresponding to the welding speed V.

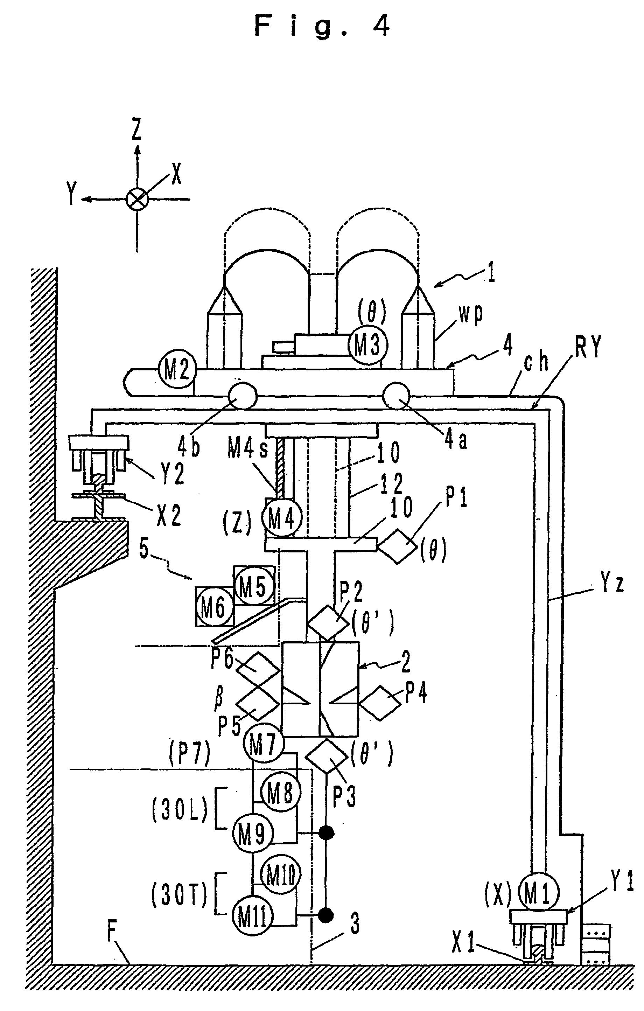

Fig. 4 shows the disposition and functions of the motors M1-M11, potentiometers P1-P5 and P7, and the rotary encoder P6 collectively. Table 1 indicates objects being driven by the motors M1-M11, and Table 2 indicates objects being detected by the potentiometers P1-P5, and P7 and the rotary encoder P6. A to D appearing in the column of "stroke" in Table 1 have values which are adjusted in accordance with an operating environment.

**Table 1-1**

| Motor No. | Drive | Stroke | Motor variety |
|---|---|---|---|
| M1 | X drive(along X-axis)of carriage 1 | 70m+A | A.C.servo motor |
| M2 | Y drive(along Y-axis)of carriage 1 | 15m+B | A.C.servo motor |
| M3 | Turning θ of head turning shaft 10 (sensor base 2 and head 3) in horizontal plane | 360° +C | A.C.servo motor |
| M4 | Up/down drive (along Z-axis) of head turning shaft 10 | 2m+D | A.C.servo motor |
| M5 | Wire feeding from wire feeder 11L | ― | D.C.motor |
| M6 | Wire feeding from wire feeder 11T | ― | D.C.motor |
| M7 | Adjusting for-and-aft angle γ of head 3(torches 30L, 30T) | +0 20° | D.C.motor |

**Table 1-2**

| Mounted on head 3 | | | | |
|---|---|---|---|---|
| M8 | Torch 30L | Driving torch 30L for projection (in Z-axis) | 80mm | Stepping motor |
| M9 | | Oscillating torch 30L in direction X perpendicular to grove | 90mm | Stepping motor |
| M10 | Torch 30T | Driving torch 30T for projection (in Z-axis) | 80mm | Stepping motor |
| M11 | | Oscillating torch 30T in direction X perpendicular to groove | 90mm | Stepping motor |

**Table 2-1**

| | No. | Objects being detected | Feed back to |
|---|---|---|---|
| Detection of positions by potentiometers | P1 | Detecting base turning angle (θ:turning angle of turning shaft 10) | X and Y drive(M1,M2) of carriage 1 |
| | P2,3 | Detecting angle of groove line (θ':angle of bending of weld line in horizontal plane) | Tracing weld line:θ' (target value of θ → M3) |
| | P2,3 | Detecting up/down traced angle (angle of bending α of weld line in vertical direction) | Up/down drive of turning shaft 10: Z-axis(M4); wire projection length z (M8,M10) |
| | P4,5 | Detecting angle of inclination of works in lateral direction (angle of inclination β with respect to horizontal plane in a plane perpendicular to weld line) | Adjusting center of oscillation (M9,M11) |

**Table 2-2**

| | | | |
|---|---|---|---|
| Detection of positions by potentiometers | P2,3 | Detecting angle of fore-and-aft inclination of groove (angle of bending α of weld line in vertical direction) | To welding condion (target value of fore-and-aft angle → M7) |
| | P6 | Travelling speed (V) of carriage 1 | X and Y drive of carriage 1 (M1,M2) |
| | P7 | Detecting angle of inclination of support frame in fore-and-aft direction (angle of inclination of frame 3 with respect to base 2) | Adjusting fore-and-aft angle γ of torch (M7) |

A control over the energization of respective motors M1-M11 in either forward or reverse direction is conducted by an operator during initialization through a pendant 9 (see Fig. 3) which is detachably mounted in the vicinity of the sensor base 2, but after the commencement of the welding operation takes place automatically by a control circuit 8 within the pendant 9 while referring to detected values from potentiometers P1-P7. The sensor base 2 contains a plurality of motor drivers, each of which drives respective motor. An energization command from the pendant 9 is transmitted to each of the motor drivers which in turn drives the connected motor in accordance with the energization command transmitted thereto.

In response to a welding start command, the control circuit 8 performs a control of the running speed of the X travelling carriage (Y1, Yz, RY, Y2) and the Y travelling carriage 4, θ rotation control for the sensor base 2, γ rotation control for the torch support frame 3 and a groove tracing control relating to the projection of the torches and the center of excursion of the oscillation thereof so that the welding torch is caused to trace the groove b, and the torch is controlled to an attitude and a target position which are established therefor and the welding speed is brought to the established speed in accordance with the information that has been supplied previously from the pendant 9 and detection values from the potentiometers P1-P5, and P7 and the rotary encoder P6.

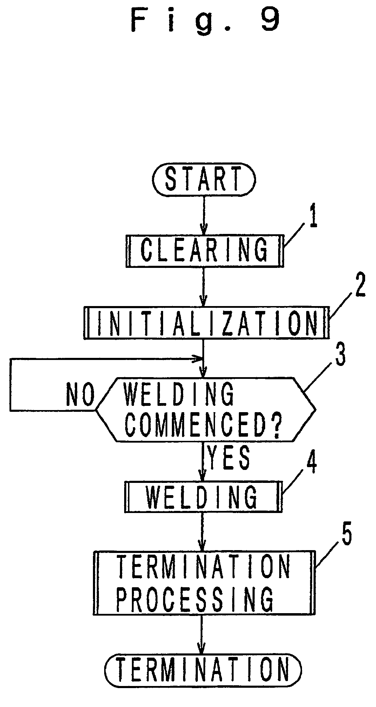

Fig. 9 shows a main routine indicating a control operation by the control circuit 8. When the power supply is turned on, the control circuit 8 clears all of internal memories and counters at step 1. A lamp, not shown, in the pendant 9 is lit to indicate the completion of the initialization of memories, then waiting for entry from an operator (initialization). Respective motors M1-M11 can be driven by the operator in accordance with a key operation on a control panel, not shown, of the pendant 9.

When the operator recognizes the completion of the initialization by lighting of a lamp on the pendant 9, he operates a key or keys on the control panel, not shown, of the pendant 9 to selectively energize the motors M1 to M11 for determining the attitudes of the welding torches 30L, 30T and their distances to the groove b. Specifically,
1. The motors M1 and M2 are driven to move the centerline O to a point Op (Figs. 1, 2 and 3) where a sensing operation with respect to the groove b is initiated. The motor M4 is driven to lower the sensor base 2, placing the first groove tracing roller (P3) on this point where the sensing operation is initiated (located within the groove). The point where the sensing operation is initiated lies at one of either end of the groove line which has a lower Z-position or elevation. It is to be noted that the works W1 and W2 are disposed on the floor F so that the groove line extends approximately parallel to the Y axis.
2. The motor M3 is driven to turn the turning shaft 10 (or sensor base 2), placing the second groove tracing roller (P2) ahead of the first groove tracing roller (P3) within the groove b as considered in the welding direction.
3. The motor M4 is driven to elevate the sensor base 2, adjusting the elevation of the sensor base 2 so that the first and the second groove tracing roller (P3, P2) lie within the groove, their Z-positions are located close to the center of a range of Z-position adjustment, and the first and the second work tracing roller P5, P4 abut against the work and have their Z-positions located close to the center of the range of Z-positions adjustment.
4. It is commanded to establish a starting attitude. In response to a command to establish a starting attitude, the control circuit 8 reads electrical signals from the potentiometers P3, P2, as converted into digital signals. By utilizing the motors M3, the sensor base 2 is driven for rotation so that the horizontal positions (assumed in a direction perpendicular to the plane of drawing of Fig. 2) of the potentiometers P3, P2 are neutral, having no deviation in horizontal position. This brings the first groove tracing roller (P3) and the second groove tracing roller P2 to horizontal positions which are reference positions with respect to the sensor base 2, without any displacement in the horizontal positions, and the welding torches 30L, 30T are located on a longitudinal line joining the both rollers (P3, P2).
5. The motor M7 is driven to drive the welding head 3 for γ rotation, adjusting the angle (the angle γ in the fore-and-aft direction) with which the welding torches 30T, 30L trace the groove b to suitable values.
6. The motors M5 and M6 are driven to feed the welding wires wa1, wa2 to the welding torches 30T, 30L.
7. The motors M9 and M11 are driven to oscillate the welding torches 30T, 30L, thus adjusting the excursion of oscillation with respect to the groove b in a direction orthogonal thereto.
8. The motors M8 and M10 are driven to adjust the projection length of the welding torches 30T, 30L, or the distances between the groove b and the distal ends of the torches.

The described operations 1 to 8 are exemplary of an initialization procedure, and the sequence of the procedure may be modified, repeated or omitted as desired. The operator then enters a required welding speed Vs through keys on the control panel of the pendant 9. Having completed the initialization, the operator indicates the completion of the initialization by the key operation on the control panel of the pendant 9.

The control circuit 8 saves the entered welding speed Vs in a register, and when there is an input indicating the completion of the initialization, it reads electrical signals from the potentiometers P1-P5 and P7 as converted into digital signals, and saves the width of excursion as well as the central position of the oscillation in registers. If the horizontal positions (namely, positions in a plane perpendicular to the plane of the drawing of Fig. 2) of the potentiometers P3, P2 are not neutral points, meaning not zero offset in a horizontal position, the motor M3 drives the sensor base 2 for rotation in the similar manner as mentioned under the paragraph 4, whereupon the need for adjustments as mentioned under the paragraphs 5 to 8 is alerted. An examination is then made to determine whether or not the horizontal positions from the potentiometers P3, P2 are at neutral points and whether or not the angle of rotation θ indicated by the potentiometer P1, the angle of rotation γ (the angle which the torch forms with respect to the horizontal plane as viewed in the fore-and-aft direction) indicated by the potentiometer P7, the projection length of the torch, the excursion of oscillation and the center position of excursion of the torch are proper by seeing if these values lie in respective preset ranges. If it is found that they are proper, a welding start enable is annunciated. If it is found that all or some of them are improper, the need for re-adjustments for those parameters which are found improper is alerted.

When the welding start enable is annunciated, the control circuit 8 remains in standby condition until a command to initiate a welding operation issued by a key operation by the operator is oncoming. When the command to initiate the welding operation is oncoming, the welding operation is initiated (subroutine at steps 3 and 4). When it is desired to interrupt the welding operation, the operator also utilizes a key operation of the pendant 9 to enter "welding stop", which will be described later.

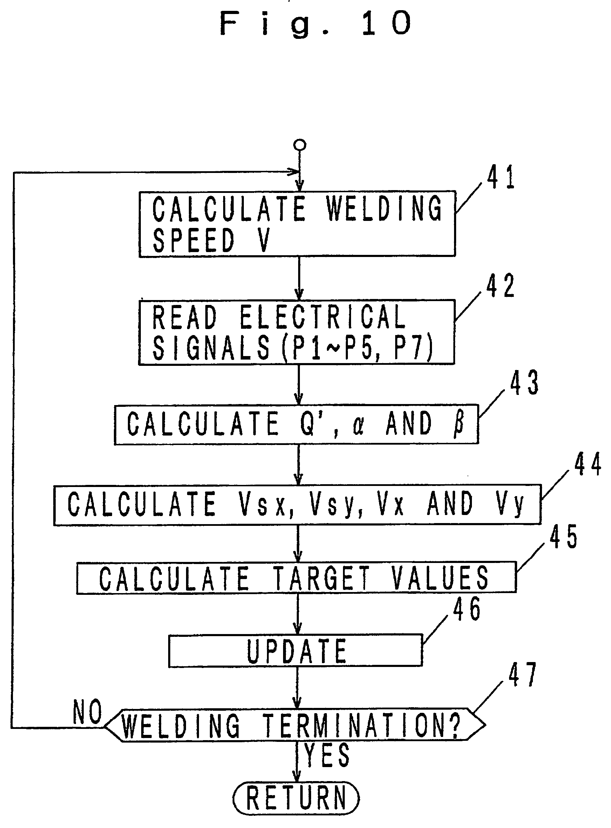

Fig. 10 shows a "welding" subroutine which takes place at step 4. The control circuit 8 then causes every pulse produced by the rotary encoder P6 to be counted up, and reads the incremented count at a given period to calculate a welding speed V which is saved in a register while clearing the incremented count (step 41), and reads electrical signals from the potentiometers P1-P5 and P7, as converted into digital signals (step 42). Subsequently, it calculates the following status information (step 43):
an angle θ' of bending of the groove : an angle θ'of bending of the groove b relative to the sensor base 2 as viewed in the direction of the θ rotation, which is calculated from a difference between the horizontal positions detected by the potentiometers P3 and P2;
an angle α of the groove in the fore-and-aft direction: an angle α (see Fig. 2) which the groove line forms with respect to the horizontal plane at a location immediately below the sensor base 2. This angle is calculated from a difference between Z-positions detected by the potentiometers P3 and P2; and
an angle β of inclination of the work in the lateral direction: an angle β of inclination of the work (see Fig. 3) in a direction transverse to the groove, which is calculated from a difference between Z-positions detected by the potentiometers P5 and P4.

When such status information θ', α and β are calculated, the control circuit 8 calculates a target angle of rotation Θ = θ + θ' which is required for the sensor base 2 in order to reduce the angle θ' of bending of the groove with respect to the sensor base 2 to zero, and then calculates the following speeds:
X running target speed Vsx = Vs cos Θ,
Y running target speed Vsy = Vs sin Θ,
X running speed Vx = V cos Θ,
Y running speed Vy = V sin Θ
(step 44). It is to be noted that the θ represents a value detected by the potentiometer P1.

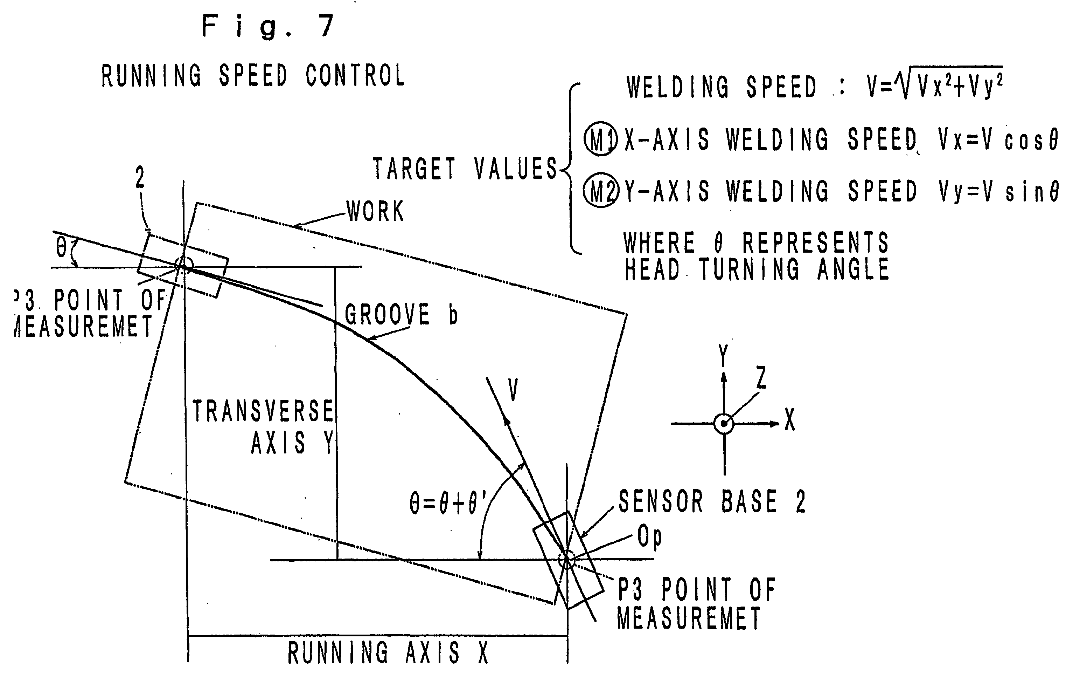

Fig. 7 shows a relationship between a travelling direction and a travelling speed (welding speed V of the sensor base 2) and the groove line. It will be seen that the travelling speed V has an X component of V cos Θ and a Y component of V sin Θ.

The control circuit 8 then calculates target values (step 45). A deviation of the X running speed Vx with respect to the X running target speed Vsx is initially calculated, and a target energizing current for the motor M1 which is required to bring this deviation to zero is calculated by a PID technique. Similarly, a deviation of the Y running speed Vy with respect to the Y running target speed Vsy is calculated, and the target energizing current for the motor M2 which is required to bring this deviation to zero is calculated by the similar PID technique. On the basis of detection data from the potentiometers P2-P5 and P7, and the excursion of the oscillation, the center position of the excursion as well as the projection length of the torch which have been read upon completion of the initialization, and detection data from the potentiometers P2-P5 and P7 which are currently read, the control circuit calculates the target values for the torch angle γ in the fore-and-aft direction, the projection length of the torch, the excursion of oscillation as well as the center position of the excursion which are necessary to maintain substantially the same relative position and attitudes between the groove and the torch as when the initialization is completed.

Fig.5 shows the required offset dxβ for the center position of the excursion of oscillation which corresponds to an angle of inclination β of the works in the lateral direction. The target value for the center position of the excursion of oscillation is determined as equivalent to the center position of the excursion of oscillation which is established during the initialization, shifted by an amount corresponding to a deviation between the required offset dxβ which is currently calculated over the required offset found during the initialization.

The control circuit 8 then drives the motors M1-M11 in accordance with the calculated target values (step 46). In this manner, the motors are driven according to the latest target values. Specifically, the control circuit 8 drives the motor M4 so that the Z-position detected by the potentiometer P3 assumes the Z-position which is assumed upon completion of initialization to drive the sensor base 2 for elevating motion, drives the motor M3 so that the angle θ detected by the potentiometer P1 assumes the target angle Θ and also drives the motors M7-M11 so as to bring the torch angle in the fore-and-aft direction, the projection length of the torch, the excursion of oscillation as well as the center position of the excursion into alignment with the respective target values. In addition, the control circuit accelerates or decelerates the motors M1 and M2 so as to bring the X running speed Vx and the Y running speed Vy into alignment with the respective target values Vsx and Vsy.

The control circuit 8 then determines whether or not a " welding stop" command is input by a key operation of the pendant 9 by the operator or whether or not the second groove tracing roller (potentiometer P2) has reached the terminal end of the groove b (step 47). If one of these has occurred, the control circuit returns to step 5 shown in Fig. 9. However, if none of them has occurred, the control circuit waits for a time over of a timer which determines the control period, then proceeding to step 41 to commence the next control cycle.

In the event " welding stop" command is input or the electrical signal from the potentiometer 2 indicates that the terminal end of the groove is reached, the control circuit 8 executes a termination processing shown at step 5 (Fig. 9), ceasing the welding operation by the welding torches 30L, 30T and bringing the respective motors to a stop.

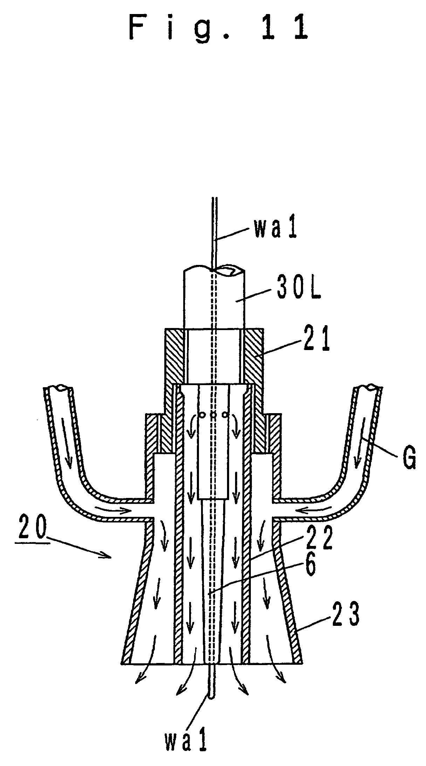

A double shield 20 is mounted on a distal end of each of the welding torches 30L and 30T (Fig. 2). Fig. 11 shows a double shield 20 mounted on the welding torch 30L in longitudinal section to an enlarged scale. The welding torch 30L feeds the welding wire wa1 through a welding tip located at the distal end into the groove while blowing shield gases. The double sheild 20 comprises an attachment 21 fixedly mounted on the welding torch 30L, and an inner nozzle 22 and an outer nozzle 23 which are fixedly mounted on the attachment 21. The inner nozzle 22 surrounds the welding tip 6 to guide a first shield gas which is blown out of the welding torch 30L downward along the tip 6. The first shield gas is blown out of an opening located at the lower end of the inner nozzle 22 to cover the welding wire wa1 which is exposed outside the tip 6. The outer nozzle 23 has a lower half which is conical, and a second shield gas G is fed from outside the welding torch 30L into the outer nozzle 23 and flows along the outer peripheral surface of the inner nozzle 13 to be blown out of an opening located at the lower end thereof to cover the outside of the first shield gas. In this manner, a region of melt located directly below the welding wire wa1 is double shielded by the first and the second shield gas. In the description to follow, a manner of blowing both the first and the second shield gas will be referred to as "double shield", while a manner of blowing only the first shield gas will be referred to as "without double shield" or as a "single shield".

A one side welding operation using the welding apparatus 1 mentioned above which is applied to curved works W1, W2 which continuously exhibit an inclination in the direction of the welding line (Y direction) and also in the perpendicular or orthogonal direction (X direction) will be described. The inclination of the work in the direction of the welding line (Y direction) will be referred to as a slope while the inclination of the work in the perpendicular direction (X direction) will be referred to as a rotation.

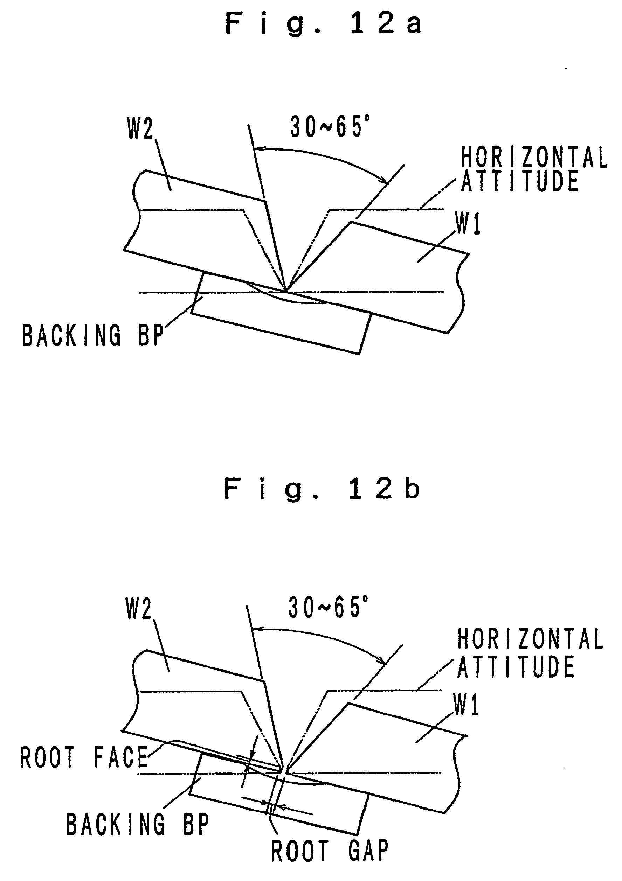

It is assumed that a groove formed between the works W1, W2 is either V-shaped (as shown in Fig. 12a) or Y-shaped (as shown in Fig. 12b) having a groove angle of 30°-65°. To prevent a displacement of the groove during the welding operation, the inner surfaces of the groove are tack welded together. A backing BP is applied to the back surface of the groove, and either steel particle or iron powder is dispersed within the groove to an elevation equal to or greater than one-quarter to two-thirds the plate thickness. An oscillation having a frequency from 40 to 150 cycles per minute is applied to a leader welding electrode wire wa1 (torch 30L) while an oscillation having a frequency from 30 to 120 cycles per minute is applied to a follower welding electrode wire wa2 (torch 30T). It is to be understood that the one cycle of oscillation comprises one reciprocatory movement.

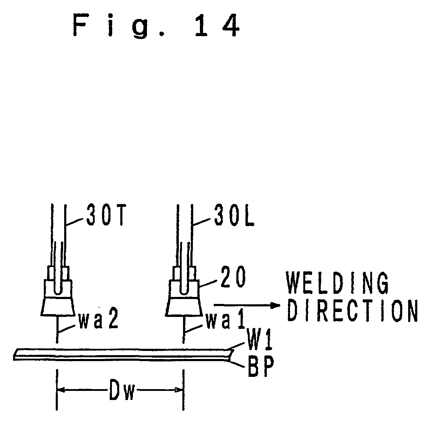

The welding current density of the leader welding electrode wire wa1 is chosen to be equal to or greater than 200 A/mm² of the wire cross-sectional area, and the welding current density for the follower welding electrode wire wa2 is chosen to be equal to or greater than 150 A/mm² of the wire cross-sectional area. An inter-electrode spacing Dw between the leader (L electrode) and the follower (T electrode) welding electrode wires wa1, wa2 is chosen to be in a range from 100 to 600 mm to effect a dual electrode one side gas-shielded arc welding operation. In this manner, the arc stabilization is achieved, front and rear beads having good crack resistance and good appearance are obtained with a high welding efficiency. It is to be noted that the inter-electrode spacing Dw represents a distance between the wires wa1 and wa2 measured along the work as shown in Fig. 14.

Fig, 13 graphically shows relationships between the elevation of dispersion of steel particle and configurations of the sealing bead in multi-electrode one side gas-shielded arc welding operations applied to several values of plate thickness. The welding conditions are indicated in Table 3. In this experiment, the magnitude of current, the excursion of oscillation and the oscillation frequency are changed depending on different values of plate thickness. The term "root gap" appearing in Table 3 refers to a minimum distance between the opposing works W1 and W2 in the cross sections of the groove, as shown in Fig. 12b.

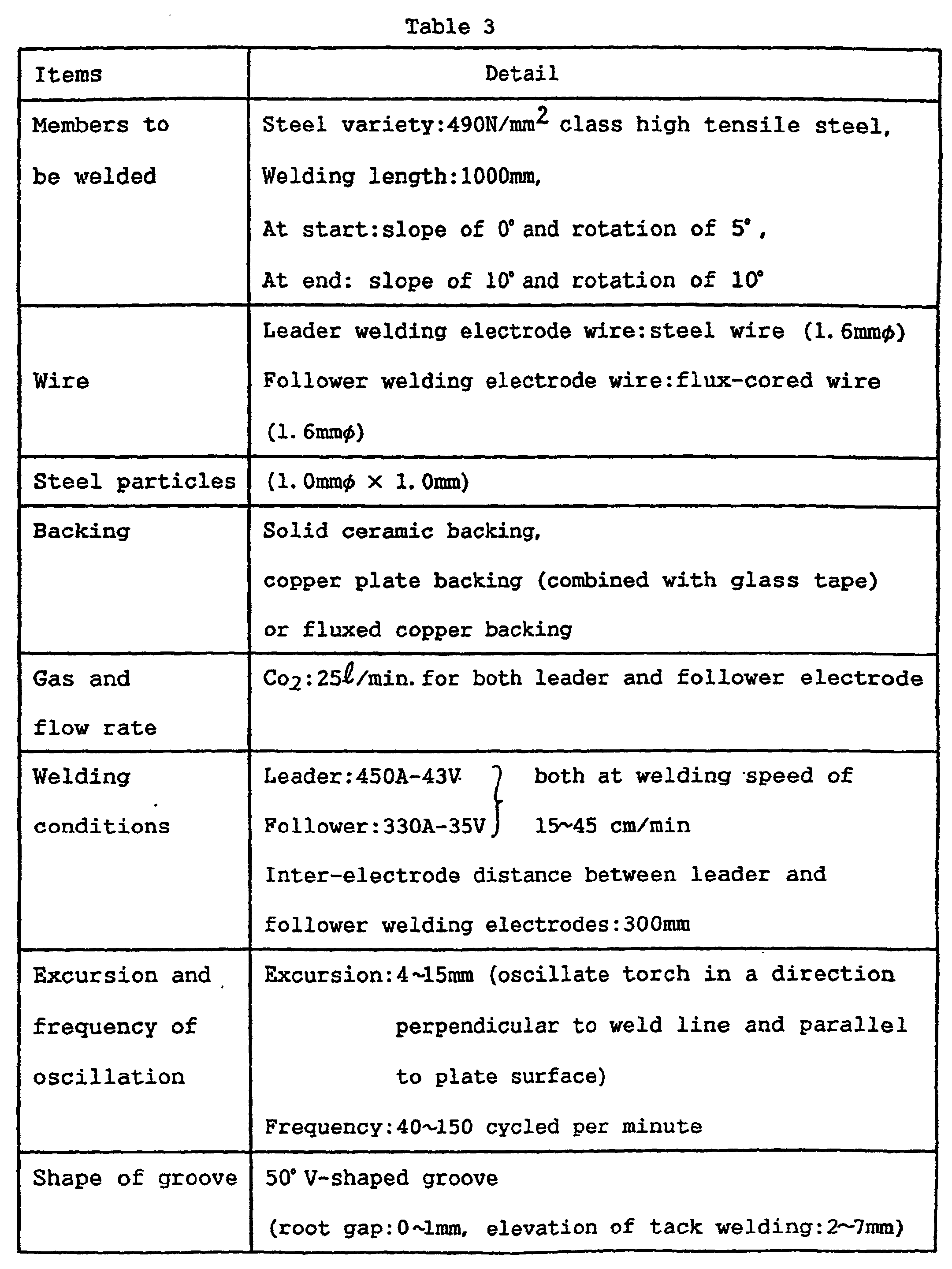

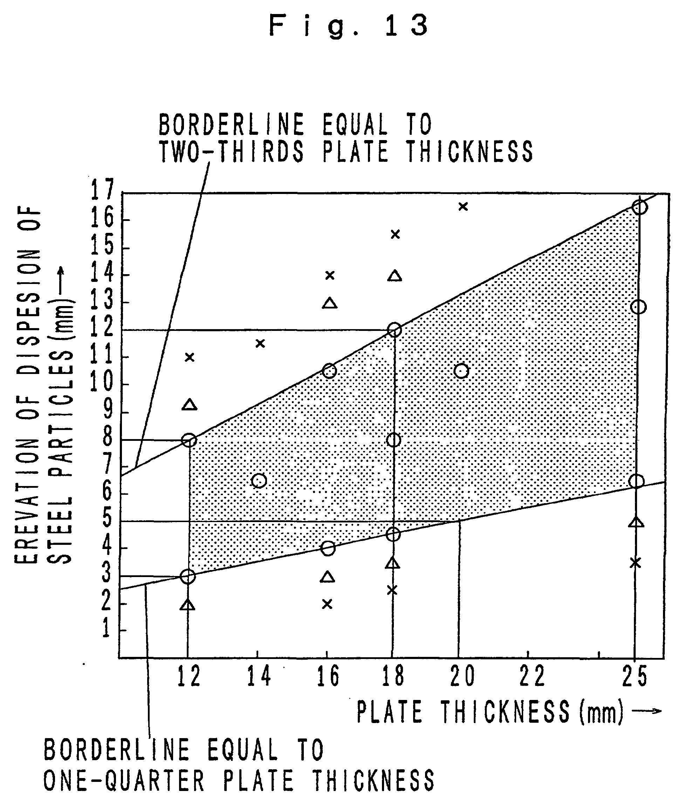

In Fig. 13, several symbols are used to denote the welding quality. Specifically, a circle indicates a good configuration of the sealing bead, a triangle indicates a poor configuration of the sealing bead, and × indicates a bad configuration of the sealing bead or the occurrence of a burn through.

It is seen from Fig. 13 that a good configuration of the sealing bead is obtained with a welding operation in which steel particle is dispersed to an elevation from one-quarter to two-thirds the plate thickness in each groove corresponding to different plate thicknesses. When the elevation of dispersion exceeds two-thirds the plate thickness, a bad configuration of the sealing beads results or the sealing bead fails to be formed. For an elevation of dispersion less than one-quarter the plate thickness, a burn through occurred.

It is preferred for the arc stability and a good configuration of the sealing bead that a particle size distribution of steel particles or iron powders comprise particle sizes equal to or less than 1.5 mm. The steel particle or iron powder comprises Fe as a principle constituent, but it is preferred for the sake of crack resistance that C be equal to or less than 0.10 % and S and P be equal to or less than 0.20 %. In consideration of the strength and toughness of the welded metal, other constituents such as Si, Mn or Mo may be included, and additionally deoxidant or alloying agent may also be included. When the particle size and the constituents are chosen as mentioned above, granular particles which are formed by cutting wires of various sizes may be used.

With a groove angle below 30°, the uniformity of the sealing bead is degraded while for a groove angle exceeding 65°, the cross-sectional area of the groove increases to reduce the welding efficiency.

A tack welding of the inner surfaces of the groove together allows a variation in the gap being reduced during the welding operation. Where a solid ceramic backing is used, it may be supported against works to be welded together with a low force enough to maintain the backing BP in abutment against the rear surfaces of the works, removing the need to use a magnet or constraining jigs. Hence, the labor requirement is reduced. A similar effect can be achieved by using a copper sheet backing with combined glass tape or flux copper backing in place of solid ceramic backing.

The tack welding across inner surfaces of the groove may extend over the entire welding length or part thereof. It is preferred that the bead height produced by the tack welding be equal to or less than 7 mm to stabilize the sealing bead, but be equal to or greater than 2 mm in order to provide a perfect tack welding.

It is preferred that the root gap be equal to or less than 5 mm and the root face (see Fig. 12 b) for the Y-shaped groove be equal to or less than 3 mm for the ease of plate joining welding and for the stability of the sealing bead. If the root gap exceed 5 mm, an increase in the cross-sectional area of the groove reduces the welding efficiency.

When the welding current density for the leader welding electrode wire wa1 is below 200 A/mm² of the wire cross section, a stabilized sealing bead cannot be obtained. In particular, a non-melting region develops in the region of tack welding. When the welding current density for the follower welding electrode wa2 is below 150 A/mm² of the wire cross section, a poor penetration results.

For the leader welding electrode wire wa1, any of solid wires for the soft steel, high tensile steel and low temperature steel as defined in JIS Z 3312 and Z 3325 may provide a good result. However, where a high toughness is required for the weld metal, it is preferred to use the solid wire for low temperature steel defined in JIS Z 3312 and Z 3325.

In view of the high welding current density per wire cross section, it is preferred that the wire diameter be from 1.4 to 2.0 mm for the leader electrode wire wa1 and from 1.2 to 2.0 for the follower electrode wire wa2 to assure a welding workability and the good configuration of the sealing bead.

As mentioned previously, the frequency of oscillation for the leader electrode wire wa1 (torch 30L) is from 40 to 150 cycles per minute in order to assure a good configuration of the sealing bead. Below 40 cycles per minute, the bead waveform is roughened, preventing a sealing bead of good configuration from being obtained. Above 150 cycles per minute, the arc becomes unstable, again preventing a sealing bead of good configuration from being obtained. The frequency of oscillation applied to the follower electrode wire wa2 is chosen to be from 30 to 120 cycles per minute in order to assure a good configuration of the front bead. Below 30 cycles per minute, the bead waveform is roughened, preventing a front bead of good configuration from being obtained. Above 120 cycles per minute, the arc becomes unstable, again preventing a front bead of good configuration from being obtained.

The excursion of oscillation being applied to the electrode is changed stepwise depending on the plate thickness in order to provide a good bead surface. For a plate thickness on the order of 10 mm, it is preferred to choose the excursion of oscillation to be 4 mm for the leader electrode wire wa1 and to be 6 mm for the follower electrode wire wa2. For a plate thickness on the order of 25 mm, it is preferred to choose the excursion of oscillation to be 10 mm for the leader electrode wire wa1 and to be 15 mm for the follower electrode wire wa2.

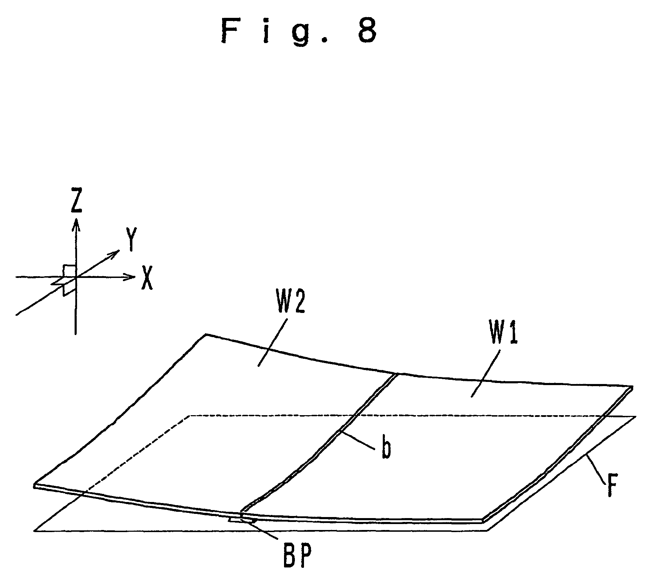

If the inter-electrode spacing Dw (Fig. 8) between the leader (L) electrode and the follower (T) electrode is below 100 mm, the arc becomes unstable and the sealing bead becomes excessive. On the other hand, if the spacing exceeds 600 mm, the size of apparatus must be increased to an undesirable degree even though such spacing is effective in improving the toughness.

It is to be understood that the welding speed is determined in accordance with the plate thickness, and a good welding can be achieved with a welding speed from 40 cm/min to 45 cm/min for a plate thickness on the order of 10 mm and with a welding speed from 15 cm/min to 20 cm/min for a plate thickness on the order of 25 mm.

The oscillation applied to the electrodes or wires wa1, wa2 may be in a direction perpendicular to the welding line and parallel to the plane of the works or may be in a direction perpendicular to the welding line and parallel to the horizontal plane, with similar effects.

The angle γ of approach of the wire with respect to the work surface (Fig. 2) may be perpendicular for both the leader and the follower electrode, but may be chosen up to an advanced angle on the order of 15° while yielding a good bead configuration.

The significance of constituents of the flux cored wire which is used as the follower electrode wire wa2 will be discussed. A range for each of the constituents will be defined below, and a reason therefor will be described.

### TiO₂ : from 2.5 to 7.0 %

TiO₂ behaves as slag former and an arc stabilizer for the welded bead. When its percentage to the total wire weight is below 2.5 %, a front bead of good configuration cannot be obtained. On the other hand, if the percentage exceeds 7.5%, an amount of oxygen in the weld metal increases to increase large sized non-metallic inclusions, thus preventing a grain refinement of micro-structures from occurring to degrade the toughness. For this reason, the range of TiO₂ is chosen to be from 2.5 to 7.0 %.

### ZrO₂ : from 0.4 to 1.0 %

ZrO₂ enhances the slag freezing rate and the slag coverage of the weld metal to improve the bead appearance. Similarly as TiO₂, it exhibits a reduced vapor pressure at high temperature and is effective in achieving fine granulation of molten particles, thus reducing the spatter. However, below 0.4 %, such effect is not obtained, but the front bead appearance becomes degraded and the amount of spatters produced increases. On the other hand, above 1.0 %, the high freezing temperature causes defect such as slag inclusion to be likely to occur. For this reason, the range is defined from 0.4 to 1.0 %.

### Al₂O₃ : from 0.1 to 1.0%

Like ZrO₂, Al₂O₃ enhances the slag freezing rate and the slag coverage of the weld metal, thus improving the bead appearance. However, such effects cannot be obtained with a percentage below 0.1 %. On the other hand, if 1.0 % is exceeded, a defect such as slag inclusion occurs, degrading the slag separability, and for this reason, the range is defined from 0.1 to 1.0 %.

### Si : from 0.2 to 1.2 %

Si acts as a deoxidant and is effective in reducing the amount of oxygen in the weld metal. However, below 0.2 %, there occurs a lack of deoxidation to give rise to the occurrence of blowholes. Above 1.2 %, it causes a solid solution hardening of ferrite to degrade the toughness. Accordigly, the range is defined from 0.2 to 1.2 %.

### Mn : from 1.0 to 4.0 %

Mn assists in the deoxidation and enhances the fluidity of the molten metals, and is effective in improving the bead configuration and improving the strength and toughness. However, below 1.0 %, there occurs lack of deoxidation, whereby welding defects are likely to occur. Above 4.0 %, the weld metal is subject to the excessive deoxidation, causing the susceptibility to produce pits and blowholes. Accordingly, the range is defined from 1.0 to 4.0 %.

### Mg : from 0.1 to 1.0 %

Mg reacts with oxygen in an arc at high temperatures, whereby the deoxidation reaction occurs at the stage of molten particles at the distal ends of wires. As a consequence, it is effective to prevent that deoxidation products remain in the molten pool, and also assists in deoxidation reaction of Si and Mn which react within the molten pool to reduce the amount of oxygen in weld metal, thus improving the toughness. However, below 0.1 %, such effect is wanting, while above 1.0 %, the arc length becomes excessive to degrade the bead configuration. Accordingly, the range is defined to be from 0.1 to 1.0 %.

### Na, K : from 0.003 to 0.3 % for a total of both elements

Na and K are effective to enhance the arc stability and to alleviate the digging action into the host material. However, such effect cannot be obtained below 0.03 % while above 0.3 %, the arc length becomes excessive to increase the amount of spatter and fume.

Where the toughness under a low temperature is required, Ni, Ti and B may be added in respective ranges defined below to the flux cored wire.

### Ni : from 0.3 to 3.0 %

Ni is added for the purpose of securing the strength and the low temperature toughness, which however cannot be obtained in a satisfactory manner below 0.3 %, while above 3.0 %, hot cracks become likely to occur. Accordingly, range is defined to be from 0.3 to 3.0 %.

### Ti : from 0.02 to 0.2 %

Ti is a strong deoxidant, which prevents the oxidation of the weld metal, and Ti oxide produced is effective to provide a fine granulation of micro-structures within the weld metal, thus improving the toughness. However, below 0.02 %, the improvement of the toughness produced by the fine granulation of the micro-structures cannot be obtained. On the other hand, if 0.2 % is exceeded, carbides are formed in a remarkable manner to degrade the toughness. Accordingly, the range is defined from 0.02 to 0.2 %.

### B : from 0.002 to 0.015 %

B is effective to provide a fine granulation of micro-structures in the weld metal, thus improving the toughness. However, below 0.002 %, such improvement effect of toughness cannot be obtained. On the other hand, if 0.015 % is exceeded, the crack resistance is degraded and carbides are formed to degrade the toughness to a remarkable degree. Accordingly, the range is defined from 0.002 to 0.015 %.

To provide a further fine granulation of micro-structures in the weld metal to improve the toughness, an addition of Al below 0.30 % and Zr below 0.20 % is possible. To adjust the strength of weld metal, an addition of Cr below 2.5 % and Mo below 2 % is possible.

In order to allow steel particles or iron powder to be dispersed within the groove, a steel wire which exhibits a greater penetration depth than the flux cored wire is used for the leader electrode wire wa1. Because the current density per wire cross section is increased, and the electrode wire is subject to oscillation, there occurs an increased amount of spatters. Accordingly, at least the leader electrode wire wa1 is covered by the double shield having an enhanced shielding effect in order to reduce the amount of spatters produced.

The amount of spatters produced in the leader welding where the occurrence of spatter is particularly notable has been evaluated according to welding conditions indicated in Table 4.

**Table 4**

| Items | Detail |
|---|---|
| Members to be welded | Steel variety:490N/mm² class high tensile steel, |
| | Welding length:1000mm, |
| | At start:slope of 0° and rotation of 5°, |
| | At end: slope of 10° and rotation of 10° |
| Wire | Steel wire(1.6mmø) |
| Steel particles | (1.0mmø × 1.0mm), Elevation of dispersion:8mm |
| Backing | Solid ceramic backing |
| Gas and Frow rate | Co₂:25ℓ/min. (per either inner or outer for double shild) |
| Welding conditions | Current:300A, 400A, 500A |
| | Voltage:30V, 41V, 44V |
| | Speed:30cm/min |
| Excursion and frequency of oscillation | Excursion:5mm |
| | Frequency:120 cycles/min |
| Plate thickness | 16mm (groove angle:50° V, rootgap:0∼1mm, height of tack welding of inner surface:5mm |

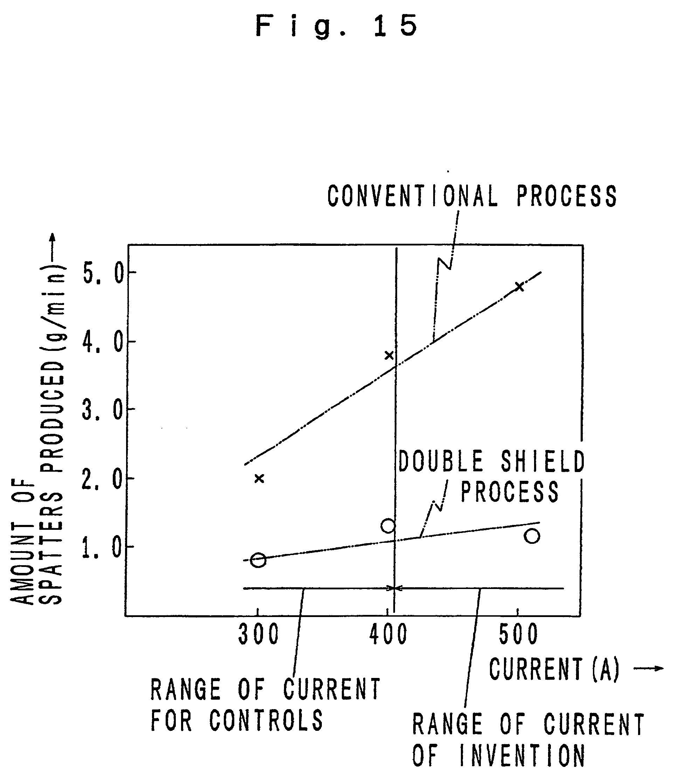

The current is changed between three levels of 300 A, 400 A and 500 A, and the amount of spatters produced has been examined when a conventional process (single shield) and double shield are used. The amount of spatters produced in the conventional process normally increases as the current is increased and is on the order of 2.0-5.0 g/min, and a welding result which produced an amount of spatters less than such values is evaluated as good. Fig. 15 graphically shows the amount of spatters produced against the welding current. When the double shield is employed, the amount of spatters produced remained equal to or below 2.0 g/min independently from a change in the current, in contrast to the conventional process (single shield).

Comparisons between embodiments and controls will be described below.

### Example 1

Steel materials indicated in Table 5, steel wires for leader electrodes (wa1) indicated in Table 6, and flux cored wires for follower electrode (wa2) indicated in Table 7 are combined to effect a dual electrode one side gas-shielded arc welding operation over a welding length of 1500 mm under varying conditions of shapes of grooves, a dispersion of steel particles or iron powder, the curvature and the welding operation as indicated in the Tables 8-13. A welding speed in a range from 15 m/min to 450 m/min is chosen depending on the plate thickness. The tack welding across the inner surfaces of the groove took place at six locations over a length of 30 mm at spacing of 300 mm, using a covered electrode.

Subsequent to the welding operation, the appearance of the front and the rear bead, the presence or absence of cracks, and impact values are examined. The impact value is determined at 0° by picking an impact test piece according to JIS Z 2202 4 from a sample subsequent to the welding operation from a central region across the plate thickness. The presence or absence of cracks is determined in the penetrant test and across macroscopic section. Results are indicated in combined form also in Tables 8-13. It is to be understood that Tables 8-13 are six divisions of a larger Table which are arrayed as follows:

| | | |
|---|---|---|
| Table 8 | Table 10 | Table 12 |
| Table 9 | Table 11 | Table 13 |

where adjoining Tables may be disposed side by side or one above another by joining corresponding numbers indicated in the Tables.

**Table 5**

| Steel variety | Plate thickness (mm) | chemical composition | | | | |
|---|---|---|---|---|---|---|
| | | C | Si | Mn | P | S |
| SM490B | 12 | 0.13 | 0.30 | 1.31 | 0.012 | 0.008 |
| | 16 | 0.14 | 0.29 | 1.32 | 0.011 | 0.007 |
| | 20 | 0.15 | 0.30 | 1.30 | 0.011 | 0.008 |
| | 25 | 0.14 | 0.31 | 1.31 | 0.012 | 0.008 |

**Table 6**

| No. | Wire chemical composition(Wt%) | | | | | | | |
|---|---|---|---|---|---|---|---|---|
| | C | Si | Mn | P | S | Mo | Ti | B |
| Wa1 | 0.06 | 0.70 | 1.90 | 0.005 | 0.003 | 0.20 | 0.15 | 0.0060 |
| Wa2 | 0.07 | 0.80 | 1.50 | 0.012 | 0.008 | ― | 0.15 | ― |

**Table 7**

| No. | Filler flux composition(Wt%) | | | | | | | | | | |
|---|---|---|---|---|---|---|---|---|---|---|---|
| | Deoxidant/alloying agent | | | | | Slag former | | | Arc stabilizer | | Else |
| | Si | Mn | Mg | Cr | Mo | Tio₂ | ZrO₂ | AL₂O₃ | Na | K | |
| F1 | 0.6 | 2.3 | 0.3 | ― | ― | 5.5 | 0.9 | 0.3 | 0.05 | 0.06 | 5.3 |
| F2 | 0.4 | 3.5 | 0.2 | ― | ― | 6.8 | 0.6 | 0.3 | 0.04 | 0.07 | 5.2 |
| F3 | 0.7 | 2.0 | 0.5 | ― | ― | 5.6 | 0.5 | 0.2 | 0.17 | 0.10 | 5.5 |
| F4 | 1.1 | 1.2 | 0.9 | 0.5 | 0.5 | 3.1 | 0.5 | 0.9 | 0.03 | 0.02 | 5.7 |
| F5 | 0.1 | 0.6 | 0.3 | ― | ― | 5.0 | 0.6 | 0.3 | 0.04 | 0.06 | 8.0 |
| F6 | 1.3 | 1.8 | 1.5 | ― | 0.5 | 5.2 | 0.5 | 0.3 | 0.05 | 0.06 | 3.8 |
| F7 | 0.5 | 4.5 | 0.6 | ― | ― | 6.0 | 0.4 | 0.3 | 0.18 | 0.20 | 2.3 |
| F8 | 0.5 | 2.0 | 0.05 | ― | ― | 6.3 | 0.4 | 0.3 | 0.01 | 0.01 | 5.4 |
| F9 | 0.6 | 2.5 | 0.5 | ― | 0.5 | 2.0 | 0.5 | 0.3 | 0.05 | 0.06 | 8.0 |
| F10 | 0.7 | 2.3 | 0.4 | ― | 0.5 | 9.2 | 0.6 | 0.3 | 0.04 | 0.07 | 0.9 |
| F11 | 0.5 | 2.5 | 0.4 | ― | 0.2 | 5.2 | 0.3 | 0.3 | 0.05 | 0.06 | 5.5 |
| F12 | 0.6 | 2.5 | 0.5 | ― | 0.5 | 5.5 | 1.3 | 0.3 | 0.04 | 0.06 | 3.7 |
| F13 | 0.6 | 2.5 | 0.5 | ― | 0.5 | 5.1 | 0.4 | 0.05 | 0.05 | 0.06 | 5.2 |
| F14 | 0.7 | 2.3 | 0.4 | ― | 0.5 | 6.0 | 0.5 | 1.45 | 0.04 | 0.06 | 3.1 |
| Note: Else" indicates slag former other than Tio₂, ZrO₂ and Al₂O₃ and iron powder | | | | | | | | | | | |

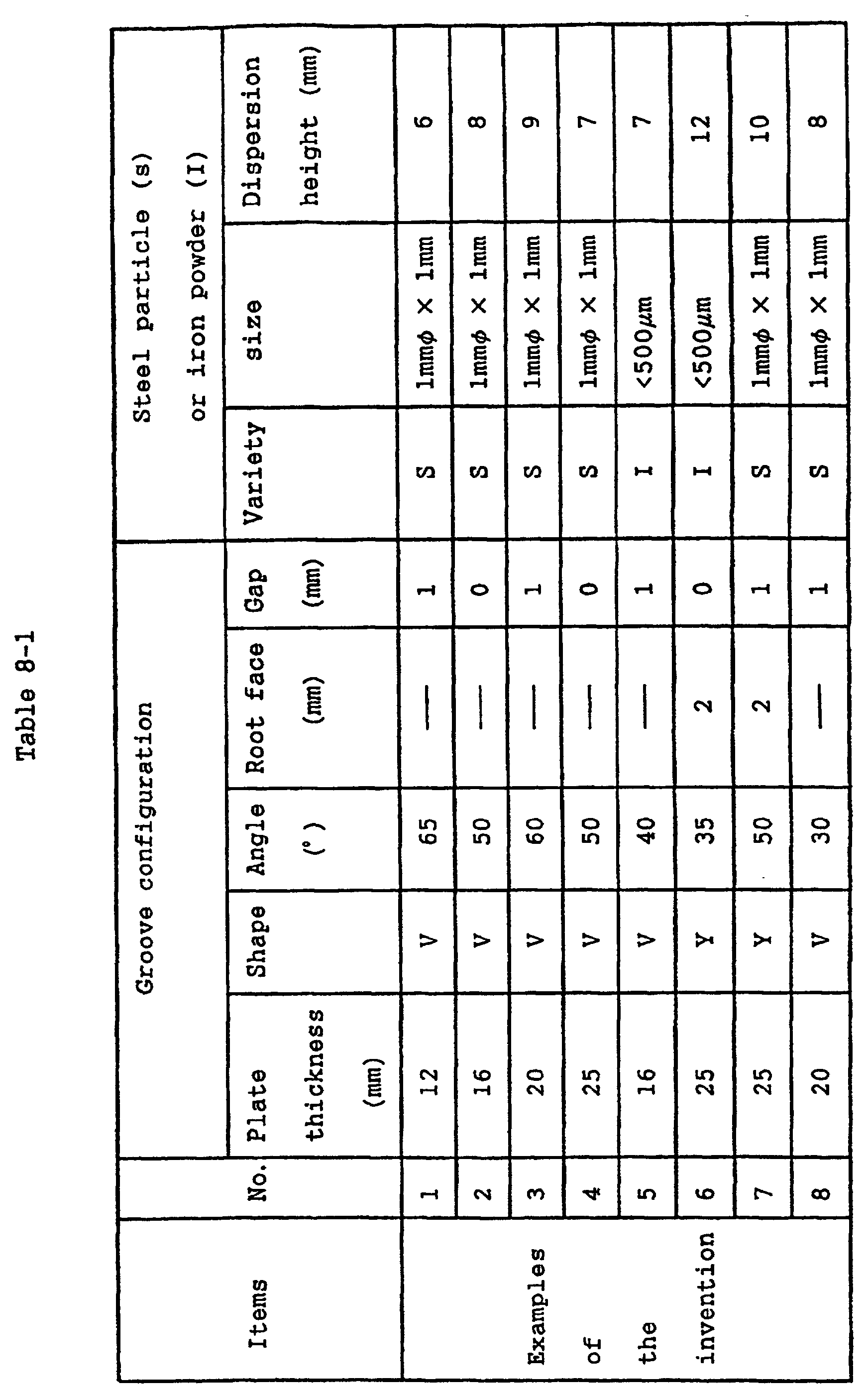

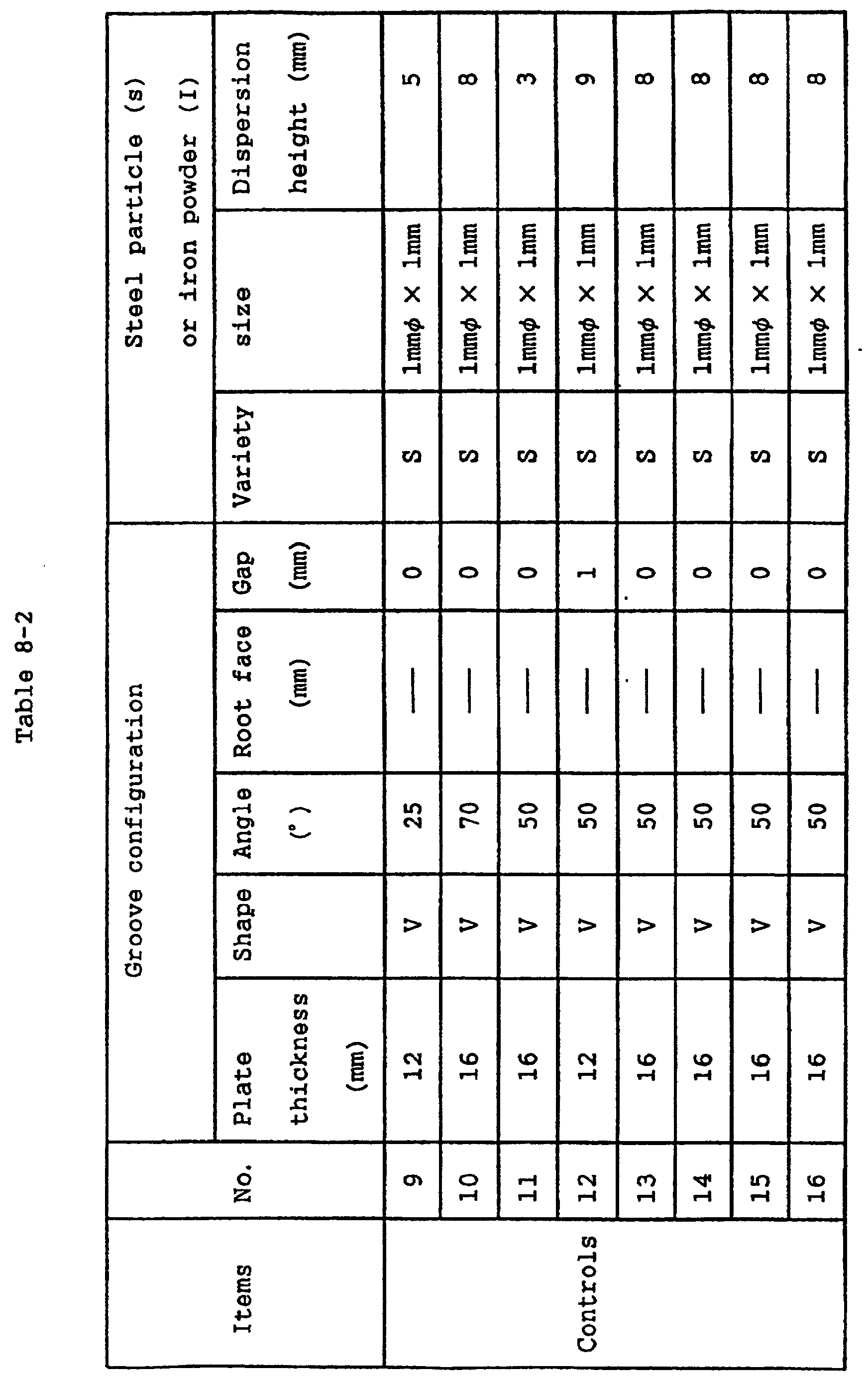

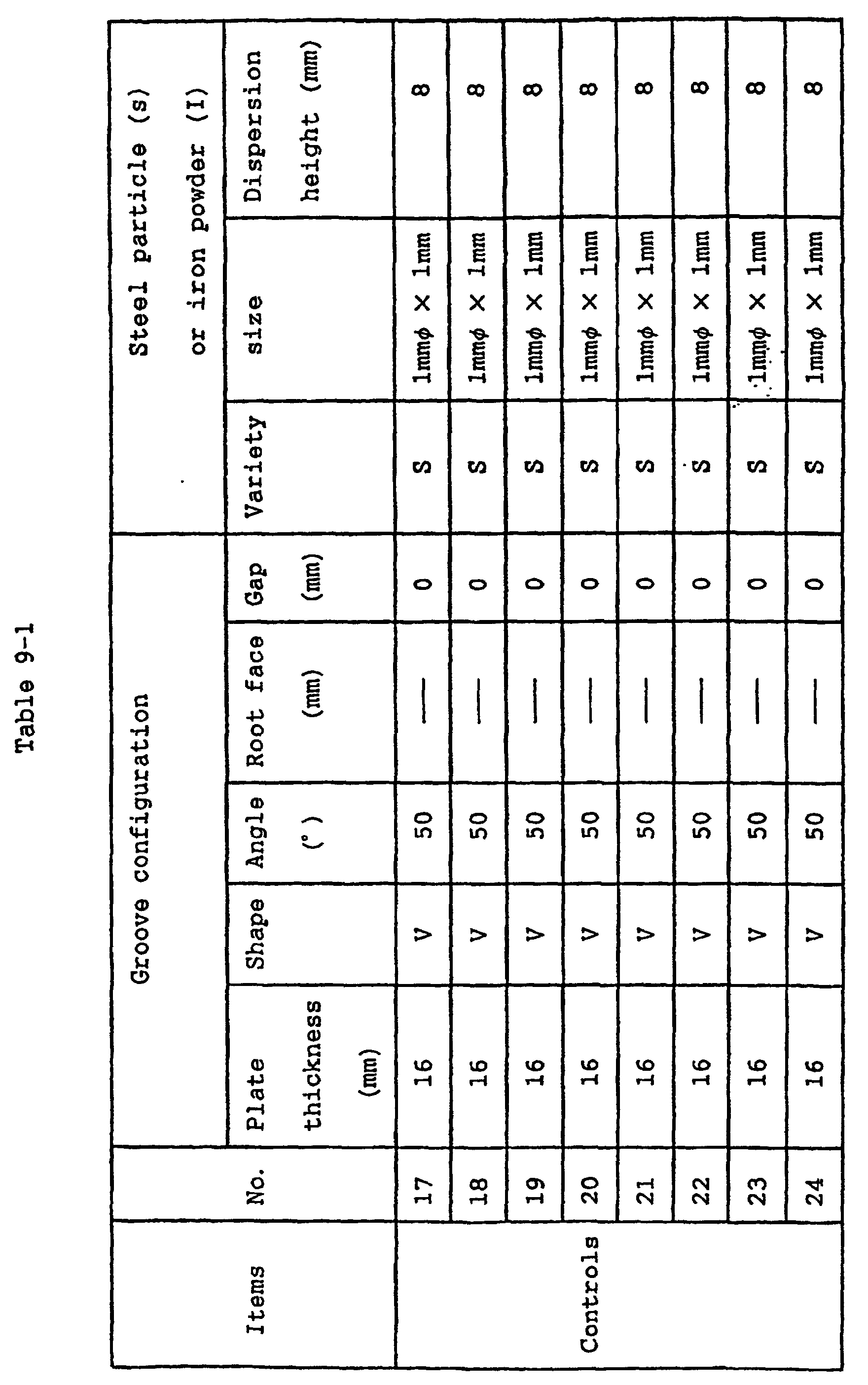

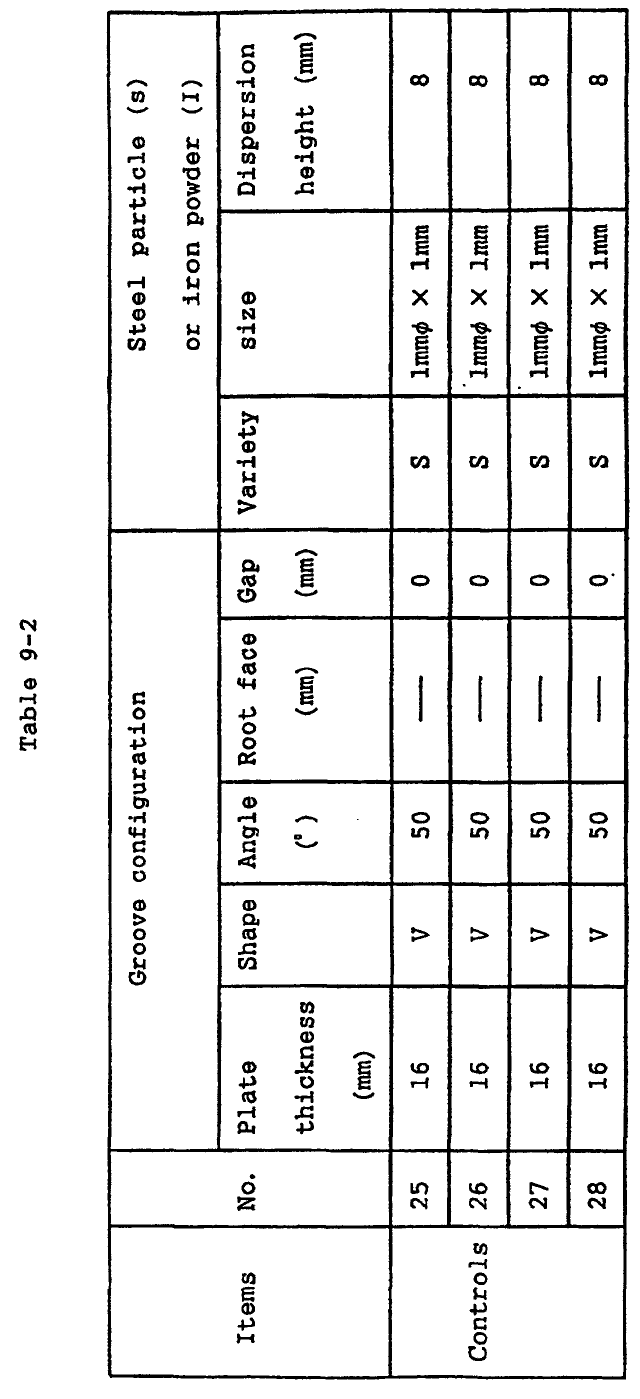

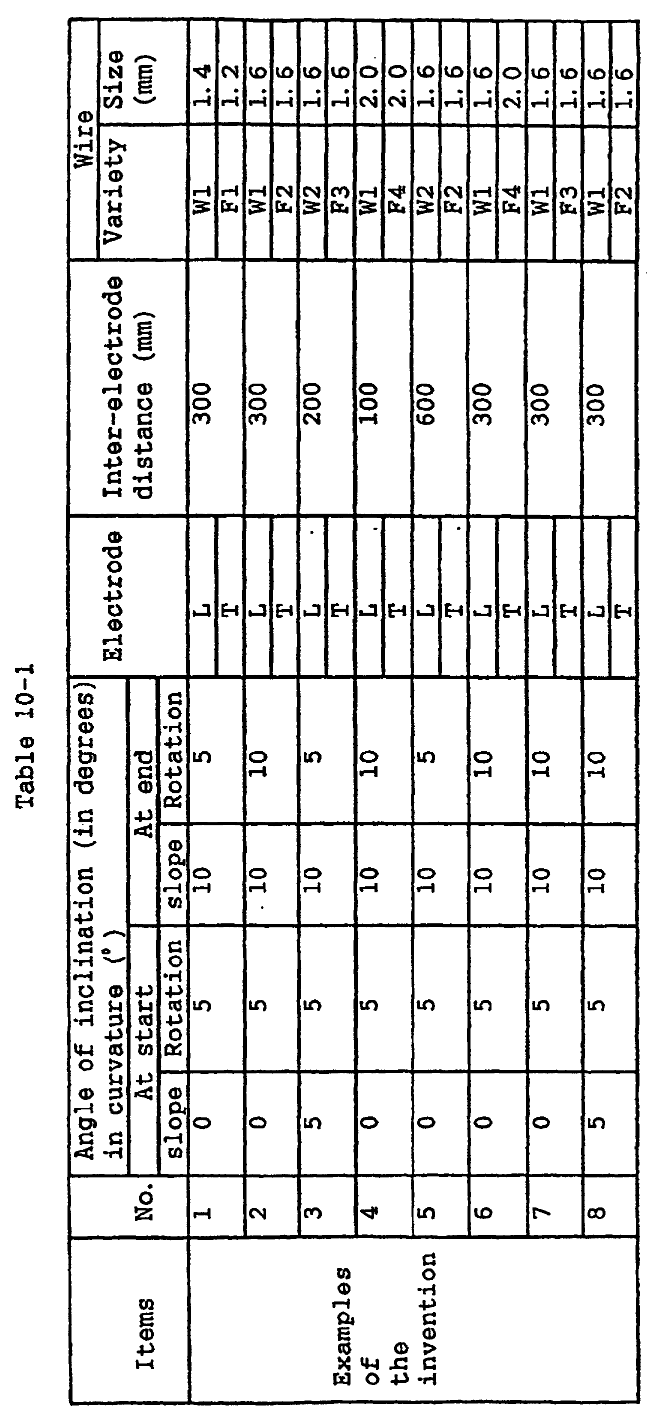

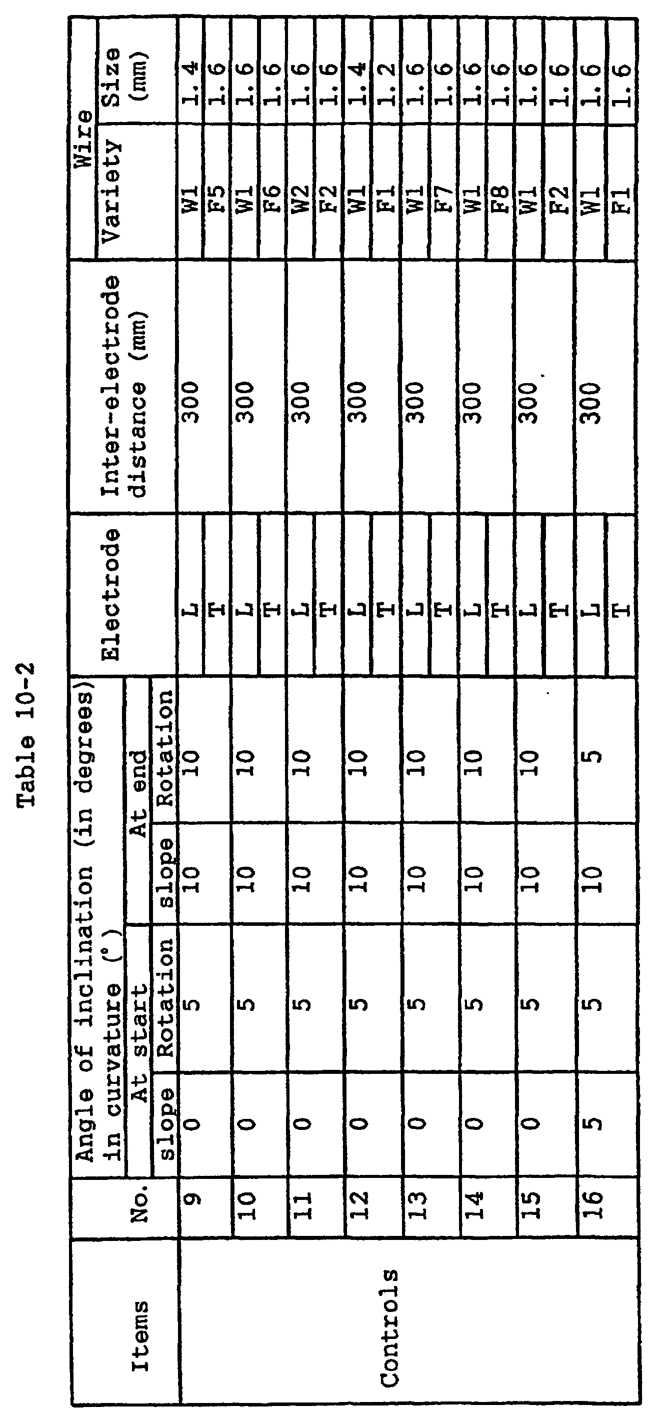

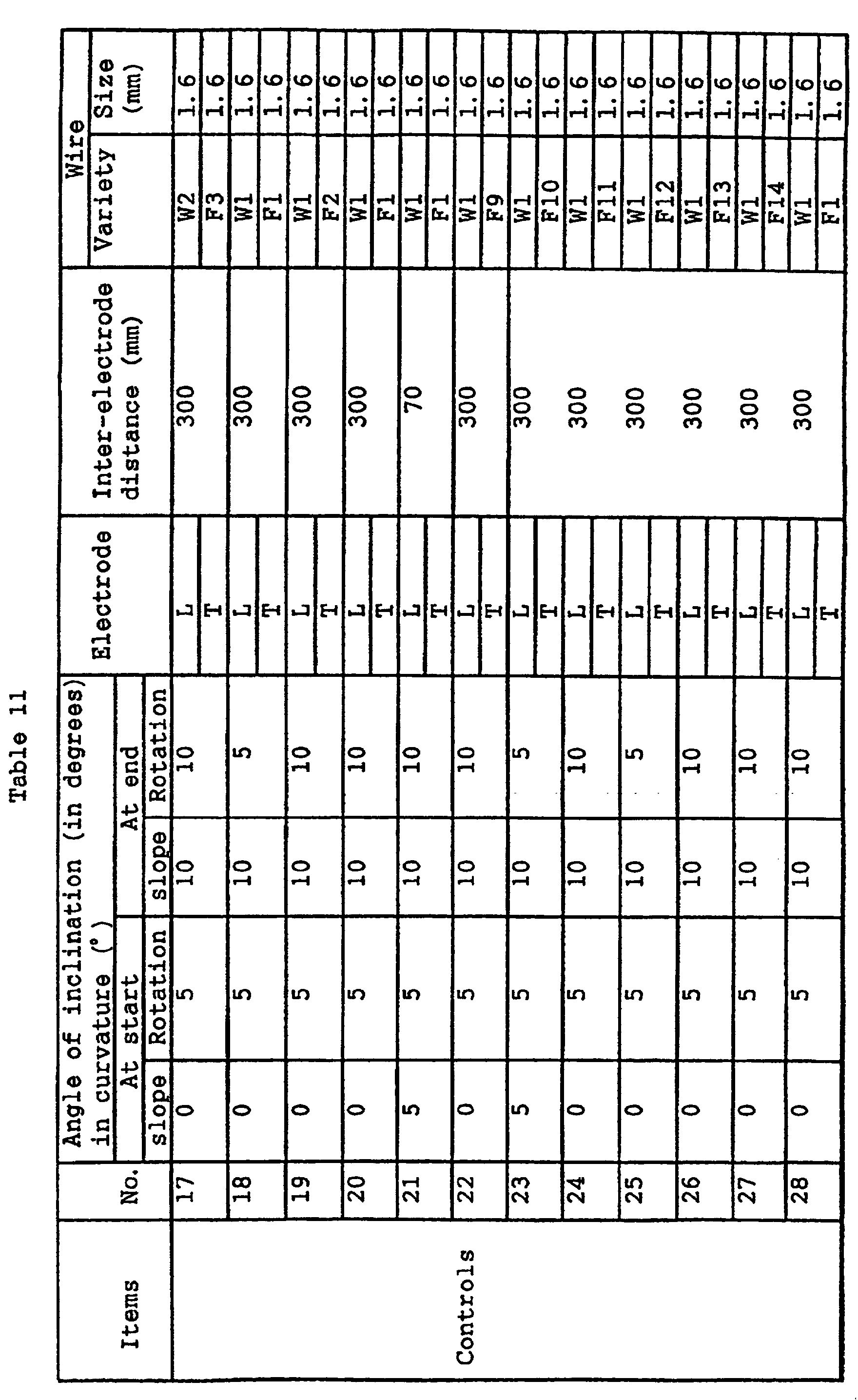

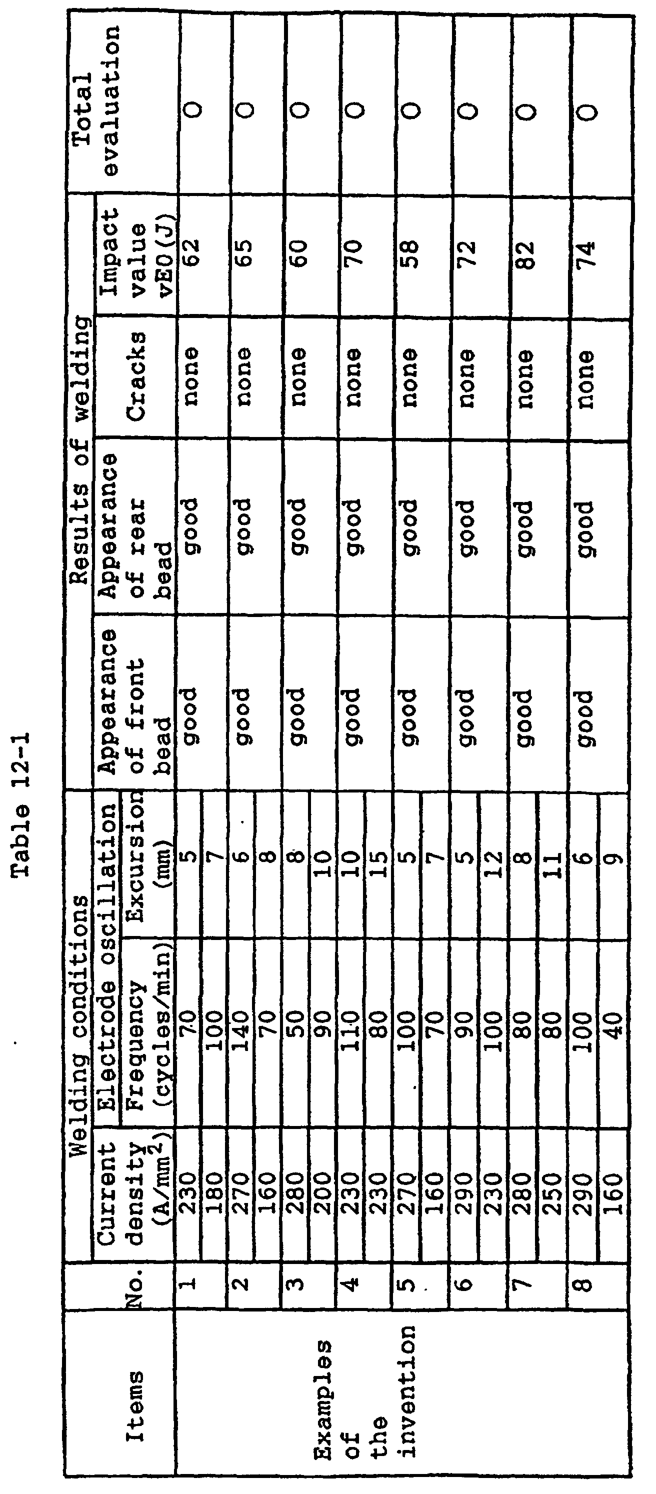

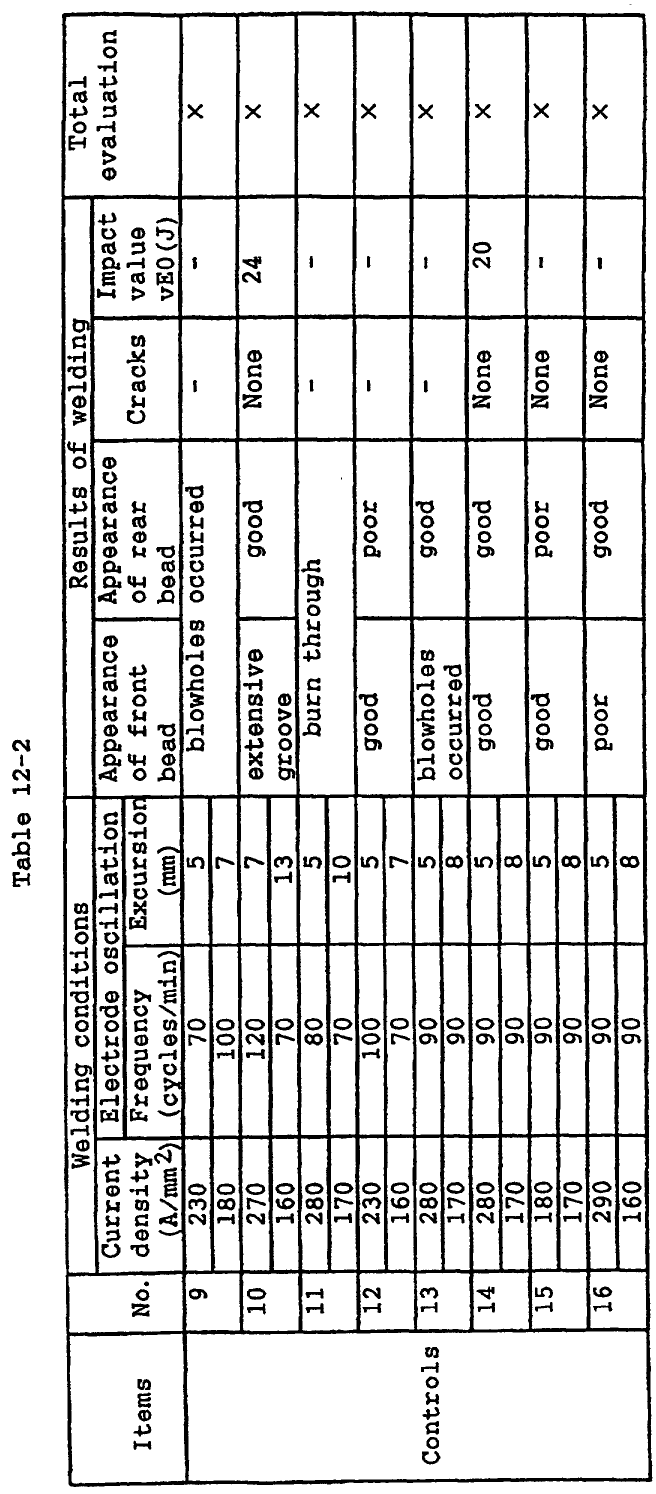

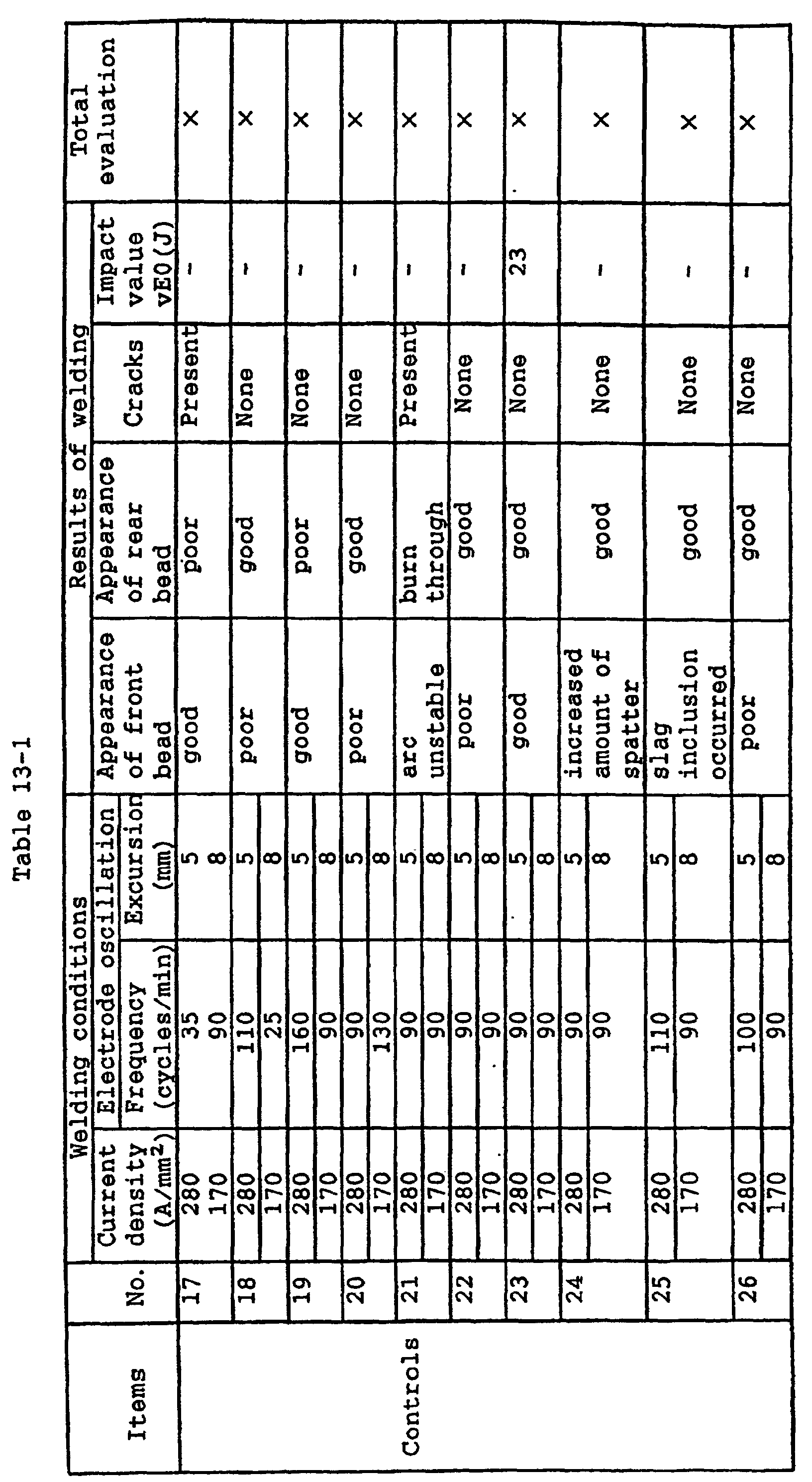

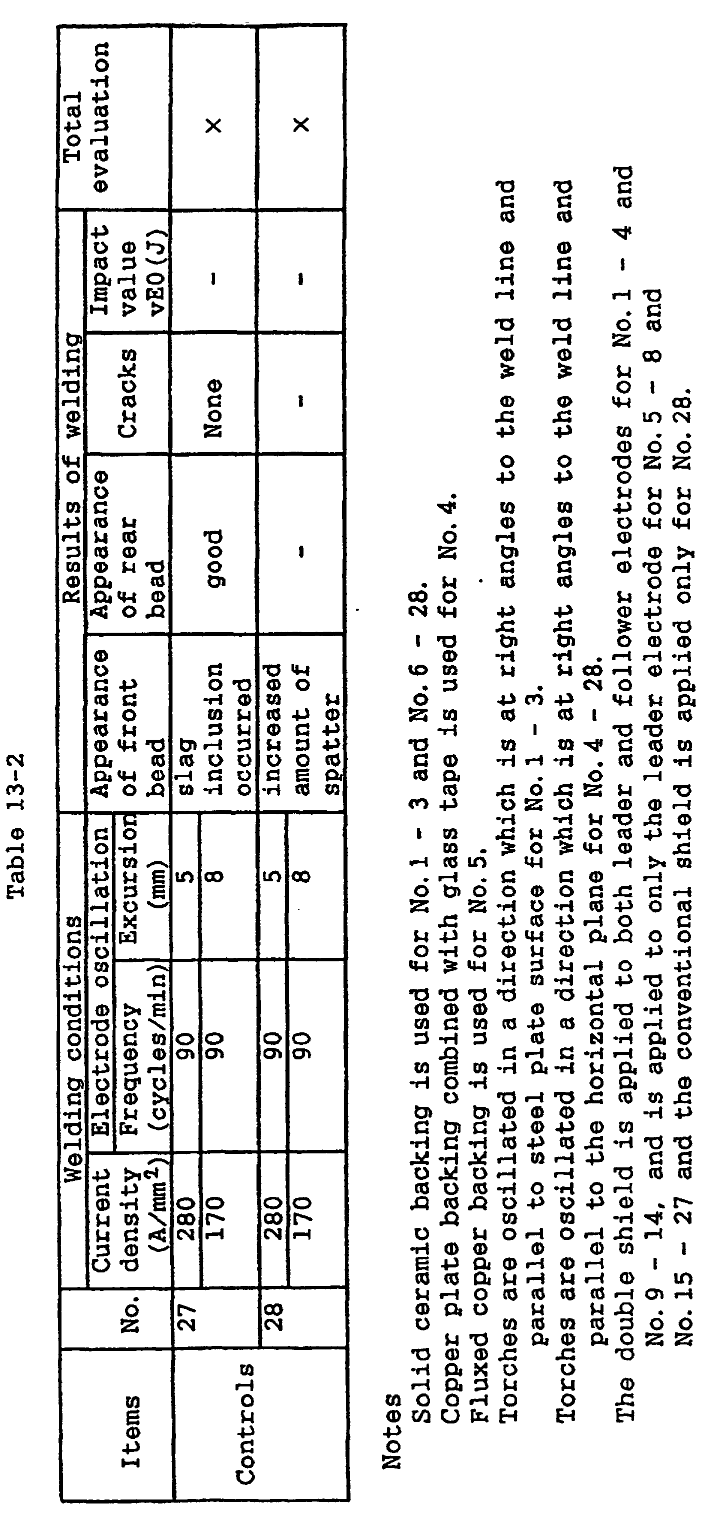

No. 1-8 shown in Tables 8 to 13 represent examples of the welding method according to the invention while No. 9-28 represent controls. In No.1-8 which represent the examples of the invention, the shape of the grooves, the elevation of the dispersion of steel particles or iron powder, the frequency of oscillation applied to the electrodes, the welding current density and the wire composition for the follower electrode wa2 are all proper, and since the double shield is used with at least the leader welding electrode wire wa1, the appearance of both the front and the rear bead is good, without any defect such as hot cracks, and also indicating very good impact values.

In No. 9 of the controls, a narrow groove angle resulted in an uneven rear bead, and a low content of Si and Mn in the follower electrode wire wa2 (indicated at F5 in Table 7) caused the occurrence of blowholes.

In No.10, the groove is extensive, and the filling by the welding operation is reduced, and the rear bead is excessive. In addition, because the follower electrode wire wa2 (F6) has a high content of Si, the toughness is reduced. Because it has a high content of Mg, the appearance of the front bead is irregular. In No.11, the dispersion of steel particles is reduced, causing a burn through of the weld metal. In No. 12, the dispersion of steel particles is high, failing to produce the rear bead. In No. 13, follower electrode wire wa2 (F7) has a high content of Mn, causing the occurrence of blowholes. Since a combined amount of Mn and K is increased, the amount of spatters produced increased.

In No.14, because the follower electrode wire wa2 (F8) has a reduced content of Mg, the toughness is reduced. Since the combined amount of Mn and K is reduced, there resulted an instability of the arc.

In No. 15, the welding current density for a leader electrode wire wa1 is low enough to prevent the rear bead from being formed.

In No. 16, the welding current density for the follower electrode wire wa2 is low enough to produce a poor appearance of the front bead.

In No. 17, the frequency of the oscillation applied to the leader electrode wire wa1 is low, causing the rear bead to be irregular.

In No. 18, the frequency of the oscillation applied to the follower electrode wire wa2 is low, causing a poor appearance in the front bead.

In No. 19, the frequency of the oscillation applied to the leader electrode wire wa1 is high, causing the instability of the arc and irregular rear bead.

In No. 20, the frequency of the oscillation applied to the follower electrode wire wa2 is high, causing the instability of the arc and poor appearance of the front bead.

In No. 21, the inter-electrode distance Dw between the leader and the follower electrode wire wa1, wa2 is small, which causes the arc to be unstable, producing a burn through of the weld metal.

In No. 22, the content of TiO₂ in the follower electrode wire wa2 (F9) is low, causing a poor appearance of the front bead.

In No. 23, the follower electrode wire wa2 (F10) has a high content of TiO₂ , reducing the toughness.

In No. 24, the follower electrode wire wa2 (F11) has a low content of ZrO₂ ,degrading the slag coverage of the weld metal, resulting in a poor appearance of the bead and an increased amount of spatters produced.

In No. 25, the follower electrode wire wa2 (F12) has a high content of ZrO₂ , which results in slag inclusion.

In No. 26, the follower electrode wire wa2 (F13) has a low content of Al₂O₃ ,degrading the slag coverage of the weld metal to result in the poor appearance of the front bead.

In No. 27, the follower electrode wire wa2 (F14) has a high content of Al₂O₃ ,causing the defect of slag inclusion and degrading the slag separation.

In No. 28, the absence of the double shield caused an increased amount of spatters produced.

### Example 2

The low temperature steel material indicated in Table 14, the steel wires indicated in Table 6 and flux cored wires indicated in Table 15 are combined to perform the dual electrode one side gas-shielded arc welding operation in the similar manner as in the example 1. In each test, the double shield is used for both the leader and the follower electrode wire wa1, wa2. The toughness is evaluated by the impact value determined at -20° C. Results are collectively listed in Tables 16, 17, 18, which are to be understood that three segments of a single larger Table are arrayed in the following manner:

| | | |
|---|---|---|
| Table 16 | Table 17 | Table 18 |

and where adjoining Tables may be disposed side by side with the numbers being aligned.

**Table 14**

| Steel variety | Plate thickness (mm) | Chemical composition(%) | | | | | |
|---|---|---|---|---|---|---|---|
| | | C | Si | Mn | P | S | V |
| Low temperrature steel KE32 | 16 | 0.15 | 0.35 | 1.35 | 0.011 | 0.010 | 0.05 |

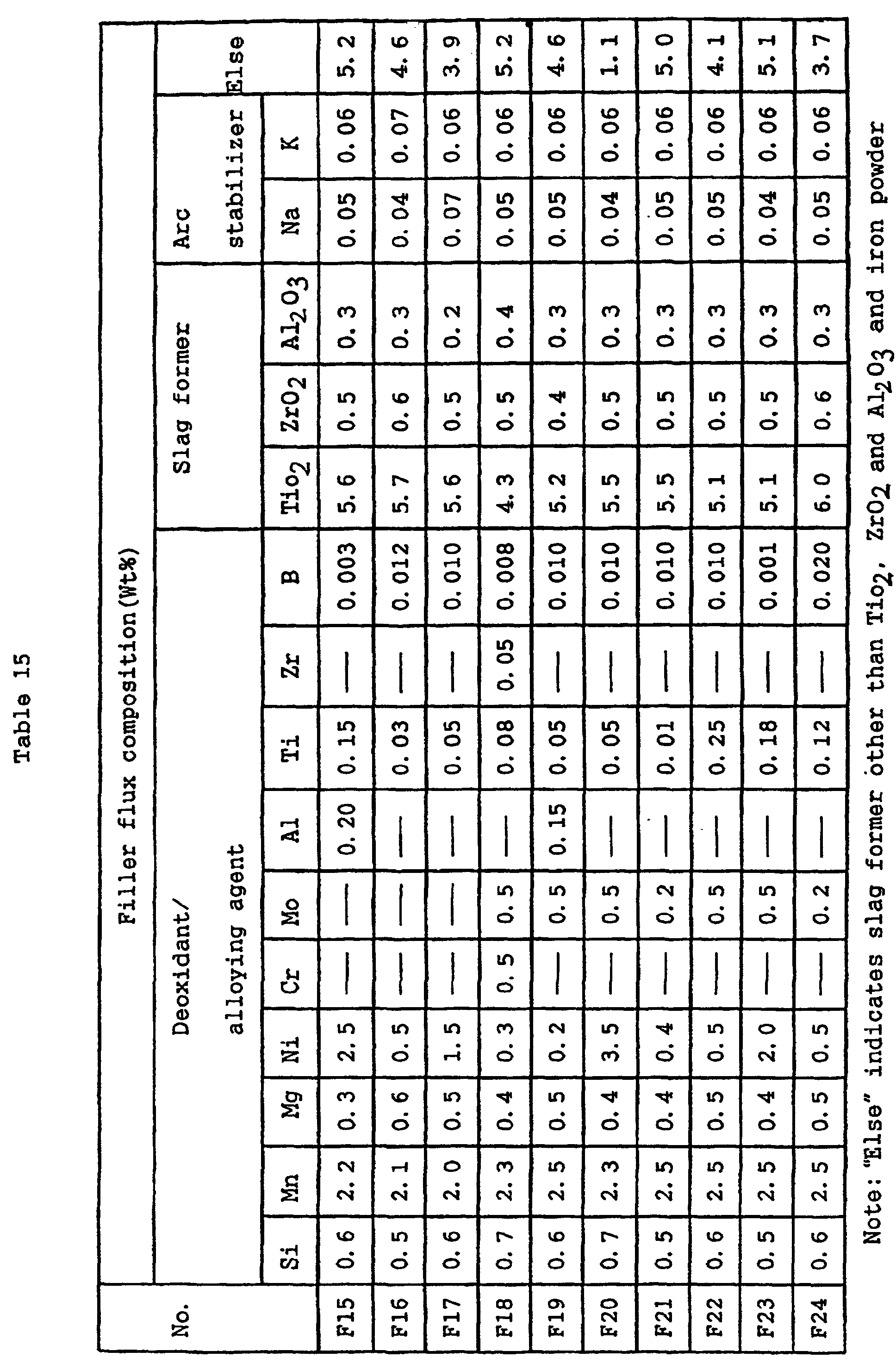

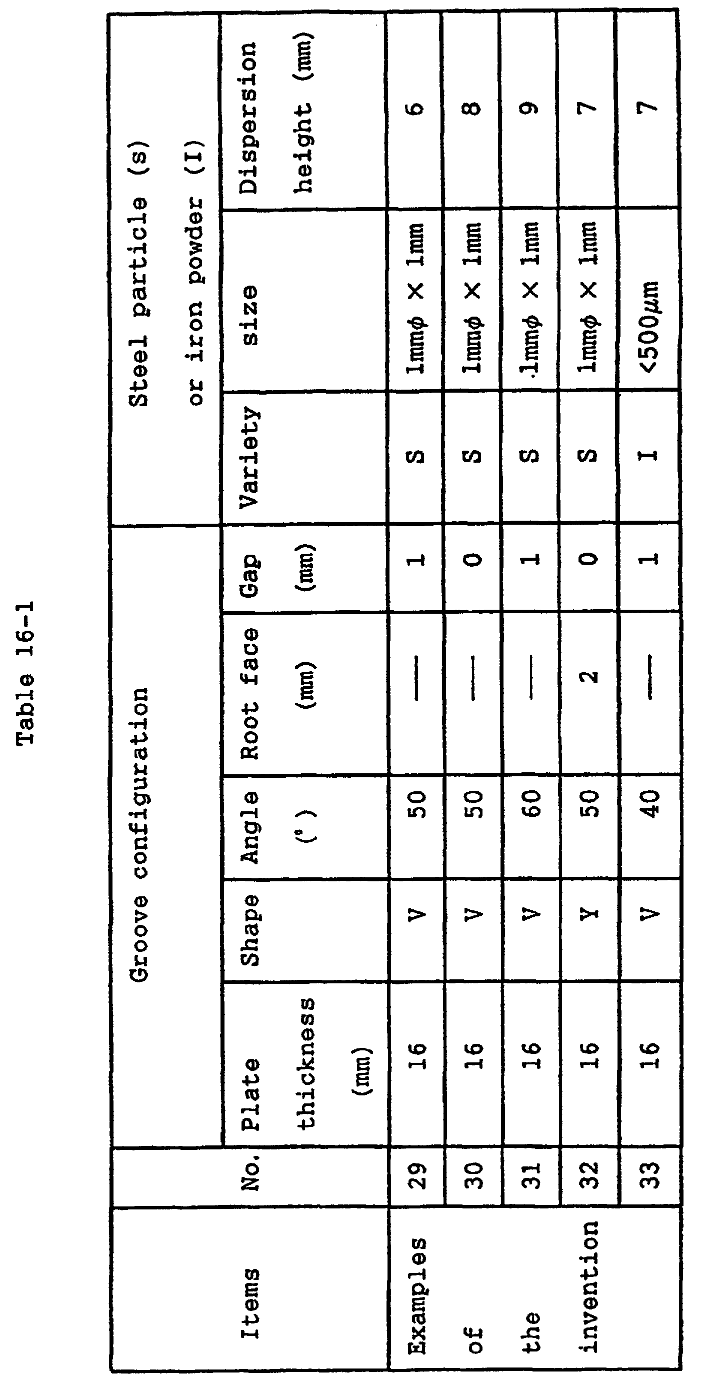

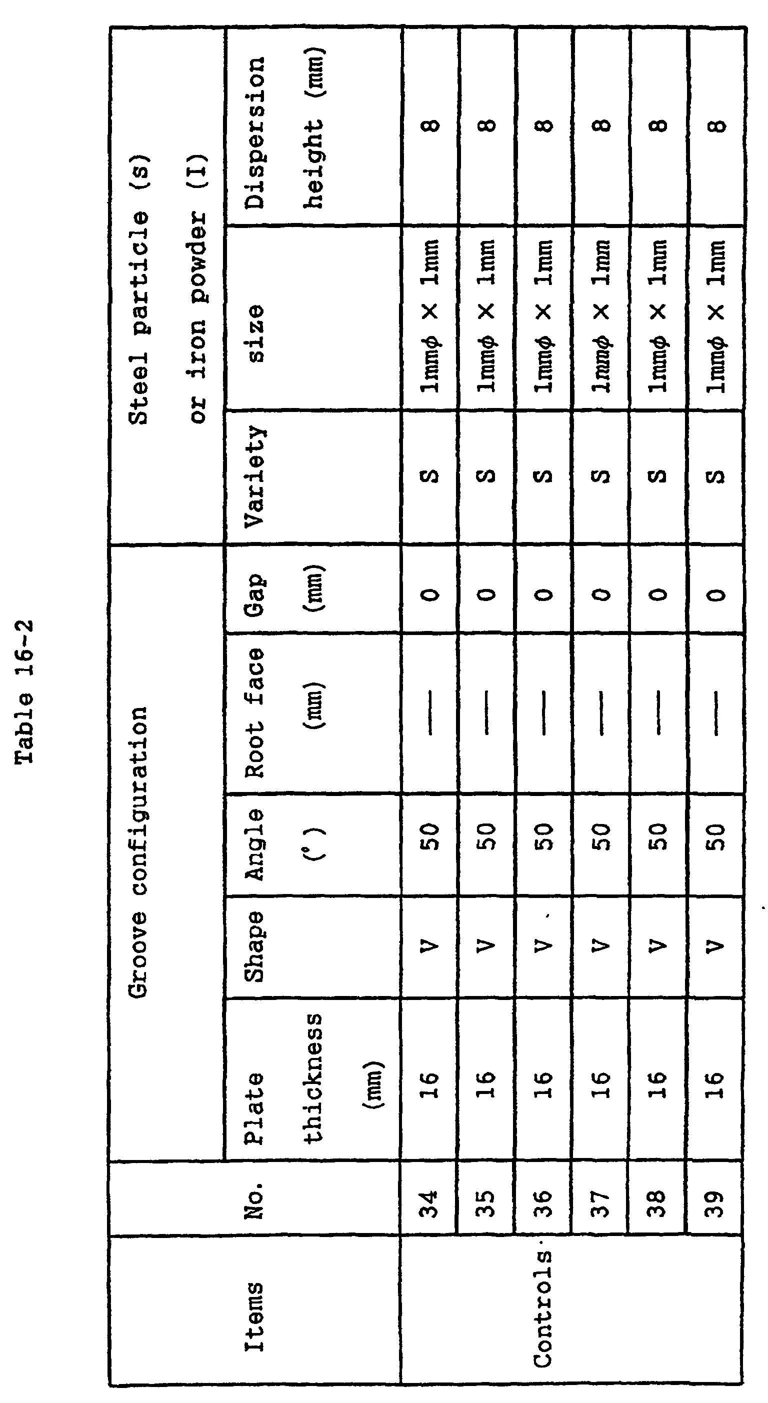

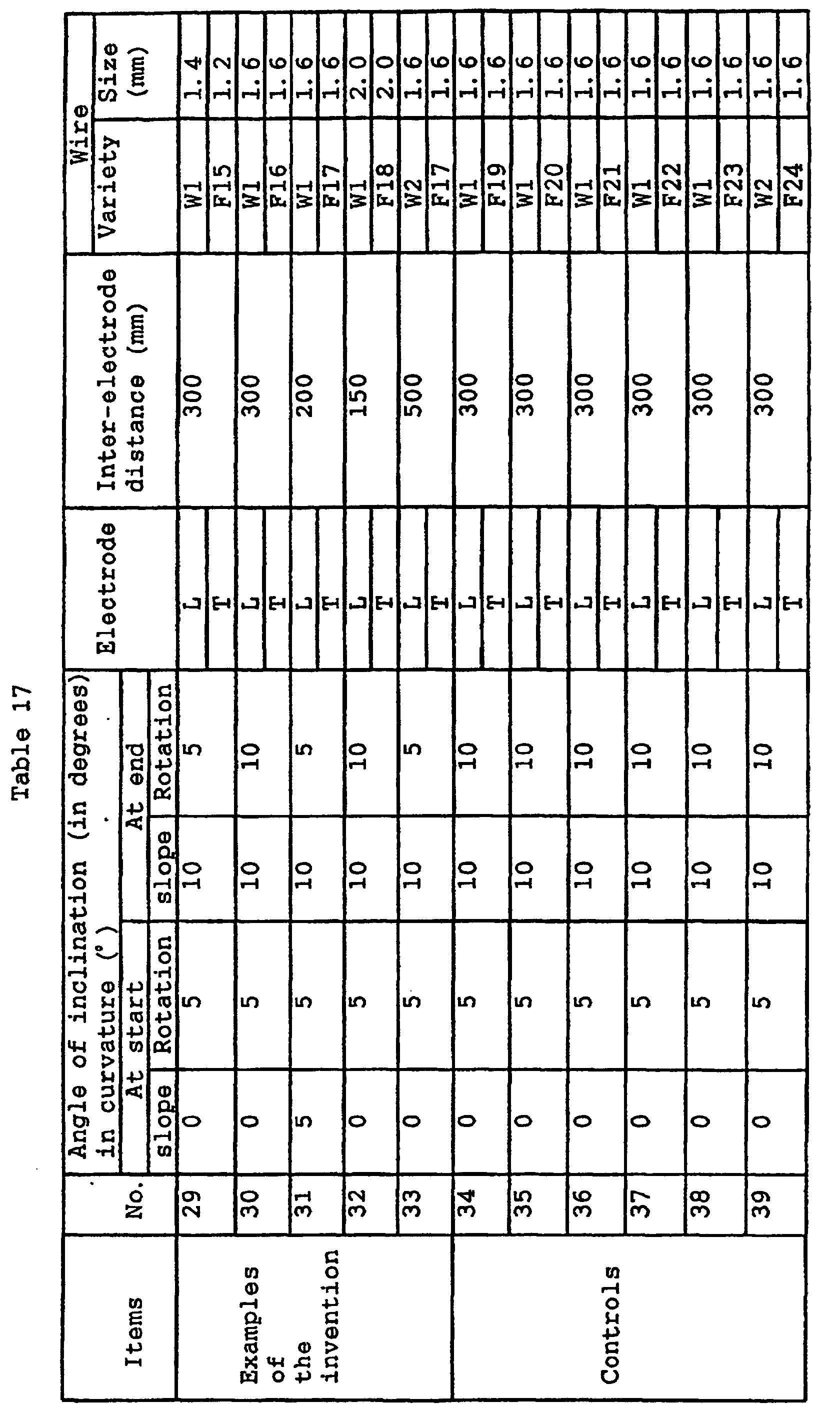

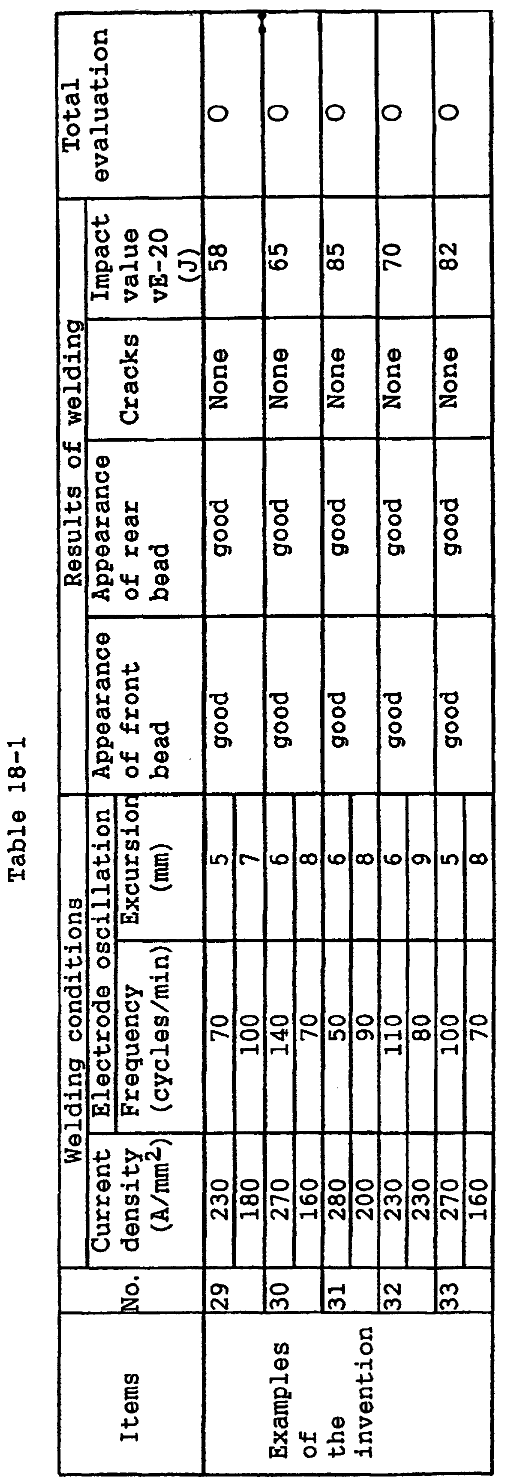

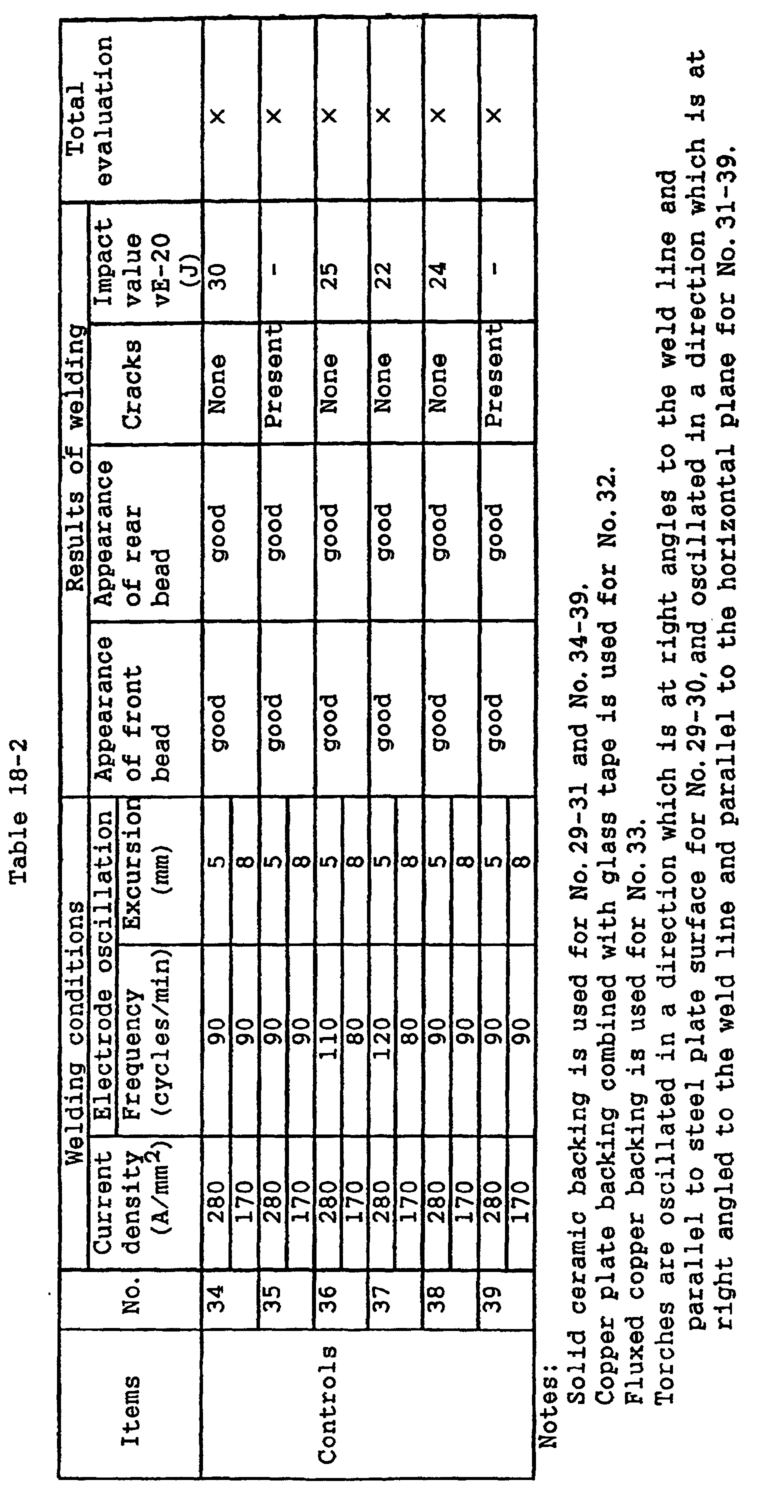

No. 29-33 represent the embodiment of the welding method according to the invention while No. 34-39 represent controls. In No. 29-33 which illustrate the invention, the shapes of the groove, the elevation of dispersion of steel particles or iron powder, the frequency of oscillation of the electrodes, the welding current density and the constituents of filling slags of the follower electrode wa2 (F15-F18 in Table 15) are all proper, and since the double shield is used for both the leader and the follower welding electrode wire wa1, wa2, both the front and the rear bead present good appearance, there are no defect such as hot cracks, and the toughness is very good.

In the controls, No.34 has a low content of Ni in the follower electrode wire wa2 (F19), resulting in a reduced toughness.

In No. 35, the follower electrode wire wa2 has a high content of Ni, causing a hot crack.

In No. 36, the follower electrode wire wa2 (F21) has a low content of Ti, reducing the toughness.

In No. 37, the follower electrode wire wa2 (F22) has a high content of Ti, again reducing the toughness.

In No. 38, the follower electrode wire wa2 (F23) has a low content of B, reducing the toughness.

In No. 39, the follower electrode wire wa2 (F24) has a high content of B, again reducing the toughness.

As discussed, the invention enables the one side welding of curved welded structures having from short to increased lengths to be achieved with a good welding workability to provide a sound weld having a high toughness, a good crack resistance and good appearance for both the front and the rear beads. In addition the cross-sectional area of the groove can be reduced, and because the welding operation takes place in a single run which does not require a complicated operation, the efficiency of plate joining operation can be easily and significantly improved.

While a preferred embodiment of the invention has been shown and described above, a number of changes and modifications are possible therein. Accordingly, it is not intended that the invention be limited to the specific construction or arrangement disclosed herein, but that the right is reserved to all changes and modifications coming within the scope of the invention defined by the appended claims.

A groove angle from 30° to 65° is chosen. A backing is applied to the rear surface of the groove, and the groove is filled with steel particles or iron powder to an elevation from one-quarter to two-thirds the plate thickness. A leader welding electrode wire is oscillated with a frequency from 40 to 150 cycles per minute while a follower welding electrode wire is oscillated at a frequency from 30 to 120 cycles per minute. A welding current density is equal to or greater than 200 A/mm² for the leader electrode and is equal to or greater than 150 A/mm² for the follower electrode, and the inter-electrode spacing between the leader and the follower electrode is chosen from 100 to 600 mm for the welding operation.

## Claims

1. An apparatus for one side welding a groove (b) formed between curved members (W1, W2) to be welded together, in particular curved steel plates, which are disposed so that their opposing edges are in abutment against each other, comprising:
an X travelling carriage (Y1, Yz, RY, Y2) travelling in a horizontal direction X and provided with an X travel motor (M1) which is driven in response to an X energization command;
a Y travelling carriage (4) for travelling in a horizontal direction Y which is perpendicular to the direction X relative to the X travelling carriage, the Y travelling carriage being carried by the X travelling carriage (Y1, Yz, RY, Y2) and provided with a Y travel motor (M2) which is driven in response to a Y energization command;
a base (2) supported on the Y travelling carriage so as to be elevatable in the vertical direction Z and rotatable about the vertical axis Z (0);
a Z elevating mechanism (12) including an elevating motor (M4) which is driven in response to Z energization command for driving the base (2) for elevating motion in the vertical direction Z;
a 0 turning mechanism (10) including a first rotation motor (M3) which is driven in response to a θ energization command to drive the base (2) for rotation about the vertical axis Z (0);
detecting means (P2, P3) supported by the base (2) for detecting a Z-position as well as a horizontal position of the groove (b) relative to the base; and
a welding torch (30L, 30T) supported by the base for welding the groove (b),
**characterized in that**
said detecting means include a first detecting means (P3) located on an extension of the axis (0) representing the center of rotation of said base (2) and a second detecting means (P2) spaced by a given distance from the axis (0) representing the center of rotation of said base (2) ; and
said apparatus further comprises control means (8) for calculating an angle of bending θ' of the groove (b) between the members (W1, W2) to be welded as measured in a direction transverse to the direction in which the groove extends and an angle of inclination α of the direction in which the groove extends with respect to the horizontal plane from detection values detected by the first and second detecting means (P2, P3), the control means (8) causing said θ turning mechanism (10) to drive the base (2) for turning motion in accordance with the angle of bending θ' and causing said Z elevating mechanism (12) to drive the base (2) for elevating motion in accordance with the angle of inclination α.

2. A one side welding apparatus for curved steel plates according to Claim 1, further comprising
a torch support frame (3) carried by the base (2) so as to be rotatable about the horizontal axis X for supporting a welding torch(30L, 30T) ;
and a γ rotating mechanism including a second rotation motor (M7) which is driven in response to a γ energization command for driving the torch support frame (3) for rotation about the horizontal axis (31a) ;

3. A one side welding apparatus for curved steel plates according to Claim 2, further comprising control means (8) for calculating an angle of bending θ' of the groove (b) formed between the members (W1, W2) to be welded as measured in a direction transverse to the direction in which the groove extends and an angle of inclination a which the direction in which the groove extends forms with respect to the horizontal plane from detection values from the first and the second detecting means (P3, P2), the control means (8) causing the θ turning mechanism (10) to drive the (2) base for turning motion in accordance with the angle of bending θ' and causing the Z elevating mechanism (12) to drive the base for elevating motion in accordance with the angle of inclination α.

4. A one side welding apparatus according to Claim 2 in which the torch support frame (3) supports the welding torch (30L, 30T) so as to be movable toward or away from a member to be welded; further comprising
a torch up/down mechanism including a torch up/down motor (M8, M10) which is driven in response to a move toward/away energization command to drive the welding torch (30L, 30T) for movement toward or away from the member (W1, W2) to be welded.

5. A one side welding apparatus according to Claim 4, further comprising control means (8) for calculating an angle of bending θ' of the groove (b) formed between the members (W1, W2) to be welded as measured in a direction transverse to the direction in which the groove (b) extends and an angle of inclination α which the direction in which the groove (b) extends forms with respect to the horizontal plane from detection values from the first and the second detecting means (P3, P2), the control means (8) causing the θ tuning mechanism (10) to drive the base (2) for turning motion in accordance with the angle of bending θ' and causing the Z elevating mechanism (12) to drive the base (2) for elevating motion in accordance with the angle of inclination a and causing the torch up/down mechanism to drive the welding torch (30L, 30T) to move away or from the member to be welded in accordance with the angle of inclination α.

6. A one side welding apparatus for curved steel plates according to Claim 2 in which the torch support frame (3) supports the welding torch (30L, 30T) in a manner to be reciprocable with respect to the members (W1,W2) to be welded in a direction which is orthogonal to a longitudinal line which joins the first and the second detecting means(P3, P2) ; the apparatus further comprising
third detecting means (P5) and fourth detecting means (P4) supported by the base (2) and spaced apart from each other in a direction orthogonal to the longitudinal line and each detecting a Z-position of the surface of a first and a second member (W1, W2) to be welded together between which the groove (b) is defined;
and an oscillating mechanism including an oscillate motor (M9, M11) which is driven in response to an oscillation energization command to drive the welding torch (30L, 30T) for reciprocatory motion.

7. A one side welding apparatus for curved steel plates according to Claim 6, further comprising control means (8) for calculating an angle of bending θ' of the groove (b) formed between the members (W1, W2) to be welded as measured in a direction transverse to the direction in which the groove (b) extends and an angle of inclination α which the direction in which the groove (b) extends forms with respect to the horizontal plane from detection values from the first and the second detecting means (P3, P2), the control means (8) causing the θ turning mechanism (10) to drive the base (2) for turning motion in accordance with the angle of bending θ' and causing the Z elevating mechanism (12) to drive the base (2) for elevating motion in accordance with the angle of inclination α, the control means (8) also calculating an angle of inclination β which the member (W1, W2) to be welded forms with respect to the horizontal plane as viewed in a direction orthogonal to the direction in which the groove (b) extends from detection values from the third and the fourth detecting means (P5, P4) for displacing the center of excursion of the oscillatory reciprocation motion which the welding torch (30L, 30T) undergoes under the action of oscillating mechanism in accordance with the angle of inclination β.

8. A method of one side welding a groove (b) formed between curved steel plates (W1, W2) to be welded together, which are disposed so that their opposing edges are in abutment against each other, with a pair of gas-shielded arc welding torches (30L, 30T) using a one side welding apparatus according to any preceding claim and comprising the steps of:
choosing a groove angle of V- or Y-shaped groove formed between the curved steel plates (W1, W2) to be welded to be from 30° to 65°, with a tack welding applied across the inner surfaces thereof;
applying a backing (BP) to the rear surface of the groove (b) and filling the groove with steel particles or iron powder to an elevation which is from one-quarter to two-thirds the plate thickness;
choosing an inter-electrode spacing between the electrode wires (wa1, wa2) of the pair of gas-shield arc welding torches (30L, 30T) to be from 100 mm to 600 mm;
choosing a welding current density to be equal to or greater than 200 A/mm² for a leader electrode wire (wa1) and to be equal to or greater than 150 A/mm² for a follower welding electrode wire (wa2); and
oscillating the leader electrode wire (wa1) at a frequency from 40 to 150 cycles per minute and the follower electrode wire (wa2) with a frequency from 30 and less than 120 cycles per minute.

9. A method of one side welding curved steel plates according to Claim 8 in which the follower electrode wire (wa1) comprises a flux cored wire filled with a flux which comprises, in weight percentage with respect to the total wire weight, the following:
TiO₂ :from 2.5 to 7.0 %
ZrO₂ :from 0.4 to 1.0 %
Al₂O₂:from 0.1 to 1.0 %
Si :from 0.2 to 1.2 %
Mn :from 1.0 to 4.0 %
Mg :from 0.1 to 1.0 %
the flux further comprising one or more of Na and K in a total amount from 0.03 to 0.3 %.

10. A one side welding method for curved steel plates according to Claim 9 in which the follower electrode wire (wa2) comprises a flux cored wire filled with a flux, further comprising, in weight percentage with respect to the total wire weight, the following:
Ni :from 0.3 to 3.0 %
Ti :from 0.02 to 0.2 %
B :from 0.002 to 0.015 %

11. A one side welding method for curved steel plates according to Claim 8 in which at least the leader electrode wire (wa1) is double shielded with a first shield gas and a second shield gas.

## Patentansprüche

1. Vorrichtung zum einseitigen Schweißen einer Nut (b), die zwischen miteinander zu verschweißenden gekrümmten Elementen (W1,W2), insbesondere gekrümmten Stahlplatten, welche so angeordnet sind, daß ihre gegenüberliegenden Ränder gegeneinanderstoßen, ausgebildet ist, mit
einem X-Bewegungsschlitten (Y1,Yz,RY,Y2), der sich in einer horizontalen Richtung X bewegt und mit einem X-Bewegungsmotor (M1) versehen ist, der in Abhängigkeit von einem X-Aktivierungsbefehl angetrieben wird;
einem Y-Bewegungsschlitten (4) zum Bewegen in einer horizontalen Richtung Y, die senkrecht zur Richtung X relativ zum X-Bewegungsschlitten verläuft, wobei der Y-Bewegungsschlitten vom X-Bewegungsschlitten (Y1,Yz,RY, Y2) getragen wird und mit einem Y-Bewegungsmotor (M2) versehen ist, der in Abhängigkeit von einem Y-Aktivierungsbefehl angetrieben wird;
einer Basis (2), die auf dem Y-Bewegungsschlitten so gelagert ist, daß sie in Vertikalrichtung Z anhebbar und um die Vertikalachse Z (0) drehbar ist;
einem Z-Hubmechanismus (12), der einen Hubmotor (M4) aufweist, welcher in Abhängigkeit von einem Z-Aktivierungsbefehl zum Antreiben der Basis (2) für eine Hubbewegung in der Vertikalrichtung Z angetrieben wird;
einem θ-Drehmechanismus (10) mit einem ersten Drehmotor (M3), der in Abhängigkeit von einem θ-Aktivierungsbefehl angetrieben wird, um die Basis (2) drehbar um die Vertikalachse Z (0) anzutreiben;
Detektionseinrichtungen (P2, P3), die von der Basis (2) gelagert werden, um eine Z-Position sowie eine Horizontalposition der Nut (b) relativ zur Basis zu detektieren; und
einem Schweißbrenner (30L, 30T), zum Schweißen der Nut (b), der von der Basis gelagert wird,
**dadurch gekennzeichnet, daß**
die Detektionseinrichtungen eine erste Detektionseinrichtung (P3), die auf einer Verlängerung der Achse (0) angeordnet ist, welche den Drehpunkt der Basis (2) bildet, und eine zweite Detektionseinrichtung (P2), die in einem vorgegebenen Abstand von der den Drehpunkt der Basis (2) bildenden Achse (0) angeordnet ist., aufweisen; und
die Vorrichtung desweiteren Steuereinrichtungen (8) zum Berechnen eines Biegewinkels θ' der Nut (b) zwischen den miteinander zu verschweißenden Elementen (W1, W2), gemessen in einer Richtung quer zu der Richtung, in der sich die Nut erstreckt, und eines Neigungswinkels α der Richtung, in der sich die Nut relativ zur Horizontalebene erstreckt, aus Detektionswerten, die von der ersten und zweiten Detektionseinrichtung (P2, P3) detektiert wurden, umfaßt, wobei die Steuereinrichtungen (8) bewirken, daß der θ-Drehmechanismus (10) die Basis (2) zur Durchführung einer Drehbewegung in Abhängigkeit vom Biegewinkel θ' antreibt und der Z-Hubmechanismus (12) die Basis (2) zur Durchführung einer Hubbewegung in Abhängigkeit vom Neigungswinkel α antreibt.

2. Vorrichtung zum einseitigen Schweißen von gekrümmten Stahlplatten nach Anspruch 1, die desweiteren umfaßt:
einen Schweißbrennerlagerrahmen (3) zum Lagern eines Schweißbrenners (30L, 30T), der von der Basis (2) so getragen wird, daß er um die Horizontalachse (X) drehbar ist;
und einen γ-Drehmechanismus einschließlich eines zweiten Drehmotors (M7), der in Abhängigkeit von einem γ-Aktivierungsbefehl angetrieben wird, um den Schweißbrennerlagerrahmen (3) zum Drehen um die Horizontalachse (31a) anzutreiben.

3. Vorrichtung zum einseitigen Schweißen von gekrümmten Stahlplatten nach Anspruch 2, die desweiteren Steuereinrichtungen zum Berechnen eines Biegewinkels θ' der zwischen den miteinander zu verschweißenden Elementen (W1, W2) gebildeten Nut (b), gemessen in einer Richtung quer zu der Richtung, in der sich die Nut erstreckt, und eines Neigungswinkels α, den die Richtung, in der sich die Nut erstreckt, relativ zur Horizontalebene bildet, aus Detektionswerten von der ersten und zweiten Detektionseinrichtung (P3, P2) umfaßt, wobei die Steuereinrichtungen (8) bewirken, daß der θ-Drehmechanismus (10) die Basis (2) zur Durchführung einer Drehbewegung in Abhängigkeit vom Biegewinkel θ' antreibt und der Z-Hubmechanismus (12) die Basis zur Durchführung einer Hubbewegung in Abhängigkeit vom Neigungswinkel α antreibt.

4. Vorrichtung zum einseitigen Schweißen nach Anspruch 2, bei dem der Schweißbrennerlagerrahmen (3) den Schweißbrenner (30L, 30T) so lagert, daß dieser in Richtung auf ein zu schweißendes Element und von diesem weg bewegbar ist, wobei die Vorrichtung desweiteren umfaßt:
einen Auf/Ab-Mechanismus für den Schweißbrenner einschließlich eines Auf/Ab-Motors (M8, M10) für den Schweißbrenner, der in Abhängigkeit von einem Zu/Weg-Aktivierungsbefehl angetrieben wird, um den Schweißbrenner (30L, 30T) für eine Bewegung in Richtung auf das zu schweißende Element (W1, W2) oder von diesem weg anzutreiben.

5. Vorrichtung zum einseitigen Schweißen nach Anspruch 4, die desweiteren Steuereinrichtungen (8) zum Berechnen eines Biegewinkels 0' der zwischen den miteinander zu verschweißenden Elementen (W1, W2) gebildeten Nut (b), gemessen in einer Richtung quer zu der Richtung, in der sich die Nut (b) erstreckt, und eines Neigungswinkels α, den die Richtung, in der sich die Nut (b) erstreckt, mit der Horizontalebene bildet, aus Detektionswerten von der ersten und zweiten Detektionseinrichtung (P3, P2), umfaßt, wobei die Steuereinrichtungen (8) bewirken, daß der θ-Drehmechanismus (10) die Basis (2) zur Durchführung einer Drehbewegung in Abhängigkeit vom Biegewinkel θ' antreibt und der Z-Hubmechanismus (12) die Basis (2) zur Durchführung einer Hubbewegung in Abhängigkeit vom Neigungswinkel α antreibt sowie der Auf/Ab-Mechanismus für den Schweißbrenner den Schweißbrenner (30L, 30T) antreibt, um sich in Abhängigkeit vom Neigungswinkel α in Richtung auf das zu schweißende Element oder von diesem weg zu bewegen.

6. Vorrichtung zum einseitigen Schweißen von gekrümmten Stahlplatten nach Anspruch 2, bei der der Schweißbrennerlagerrahmen (3) den Schweißbrenner (30L, 30T) so lagert, daß dieser in bezug auf die zu schweißenden Elemente (W1, W2) in einer Richtung hin- und herbewegbar ist, die senkrecht zu einer in Längsrichtung verlaufenden Linie verläuft, welche die erste und zweite Detektionseinrichtung (P3, P2) miteinander verbindet, und bei der die Vorrichtung desweiteren umfaßt:
eine dritte Detektionseinrichtung (P5) und eine vierte Detektionseinrichtung (P4), die von der Basis (2) gelagert werden und in einer Richtung senkrecht zur in Längsrichtung verlaufenden Linie voneinander beabstandet sind, wobei jede eine Z-Position der Fläche eines ersten und zweiten miteinander zu verschweißenden Elementes (W1, W2), zwischen denen die Nut (b) ausgebildet ist, detektiert; und
einen Schwingungsmechanismus einschließlich eines Schwingungsmotors (M9, M11), der in Abhängigkeit von einem Schwingungsaktivierungsbefehl angetrieben wird, um den Schweißbrenner (30L, 30T) zur Durchführung einer hin- und hergehenden Bewegung anzutreiben.

7. Vorrichtung zum einseitigen Schweißen von gekrümmten Stahlplatten nach Anspruch 6, die desweiteren Steuereinrichtungen (8) zum Berechnen eines Biegewinkels 0' der zwischen den miteinander zu verschweißenden Elementen (W1, W2) gebildeten Nut (b), gemessen in einer Richtung quer zu der Richtung, in der sich die Nut (b) erstreckt, und eines Neigungswinkels α, den die Richtung, in der sich die Nut (b) erstreckt, relativ zur Horizontalebene bildet, aus Detektionswerten der ersten und zweiten Detektionseinrichtung (P3, P2) umfaßt, wobei die Steuereinrichtungen (8) bewirken, daß der 0-Dreh-mechanismus (10) die Basis (2) zur Durchführung einer Drehbewegung in Abhängigkeit vom Biegewinkel 0' antreibt und der Z-Hubmechanismus (12) die Basis (2) zur Durchführung einer Hubbewegung in Abhängigkeit vom Neigungswinkel α antreibt, und wobei die Steuereinrichtungen (8) ferner einen Neigungswinkel **β**, den das zu schweißende Element (W1, W2) relativ zur Horizontalebene in einer Richtung senkrecht zu der Richtung, in der sich die Nut (b) erstreckt, bildet, aus Detektionswerten der dritten und vierten Detektionseinrichtung (P5, P4) berechnen, um den Bewegungsmittelpunkt der hin- und hergehenden Schwingbewegung, die der Schweißbrenner (30L, 30T) unter der Wirkung des Schwingmechanismus durchführt, in Abhängigkeit vom Neigungswinkel zu verschieben.

8. Verfahren zum einseitigen Schweißen einer Nut (b), die zwischen miteinander zu verschweißenden gekrümmten Stahlplatten (W1, W2), welche so angeordnet sind, daß ihre gegenüberliegenden Ränder gegeneinanderstoßen, ausgebildet ist, mit einem Paar von Schutzgas- Lichtbogenschweißbrennern (30L, 30T) unter Verwendung einer Vorrichtung zum einseitigen Schweißen nach einem der vorangehenden Ansprüche mit den folgenden Schritten:
Auswählen des Nutwinkels der zwischen den miteinander zu verschweißenden gekrümmten Stahlplatten (W1, W2) gebildeten V- oder Y-förmigen Nut auf einen Wert von 30° bis 65° mit einer über die Innenflächen derselben aufgebrachten Haftschweißung;
Aufbringen einer Unterstützung (BP) auf die Rückseite der Nut (b) und Füllen der Nut mit Stahlpartikeln oder Eisenpulver bis auf eine Höhe, die einem Viertel bis zu zwei Dritteln der Plattendicke entspricht;
Auswählen des Interelektrodenabstandes zwischen den Elektrodendrähten (wa1, wa2) des Paares der Schutzgas-Lichtbogenschweißbrenner (30L, 30T) auf einen Wert von 100 mm bis 600 mm;
Auswählen der Schweißstromdichte derart, daß diese 200 A/mm² entspricht oder größer als dieser Wert ist, für einen vorderen Elektrodendraht (wa1) und derart, daß diese 150 A/mm² entspricht oder größer als dieser Wert ist, für einen Folgeschweißelektrodendraht (wa2); und
Schwingenlassen des vorderen Elektrodendrahtes (wa1) mit einer Frequenz von 40 bis 150 Zyklen pro Minute und des Folgeelektrodendrahtes (wa2) mit einer Frequenz von 30 und weniger als 120 Zyklen pro Minute.

9. Verfahren zum einseitigen Schweißen von gekrümmten Stahlplatten nach Anspruch 8, bei dem der Folgeelektrodendraht (wa1) einen mit einem Flußmittelkern versehenen Draht umfaßt, der mit einem Flußmittel gefüllt ist, das in Gew% bezogen auf das gesamte Drahtgewicht die folgenden Bestandteile enthält:
TiO₂ von 2, 5 bis 7,0%
ZrO₂ von 0, 4 bis 1,0%
Al₂O₂ von0,1 bis 1,0%
Si von 0,2 bis 1,2%
Mn von 1,0 bis 4,0%
Mg von 0,1 bis 1,0%,
wobei das Flußmittel desweiteren Na und/oder K in einer Gesamtmenge von 0,03 bis 0,3% enthält.

10. Verfahren zum einseitigen Schweißen von gekrümmten Stahlplatten nach Anspruch 9, bei dem der Folgeelektrodendraht (wa2) einen mit einem Flußmittelkern versehenen Draht umfaßt, der mit einem Flußmittel gefüllt ist, das desweiteren in Gew% bezogen auf das Gesamtdrahtgewicht die folgenden Bestandteile enthält:
Ni von 0,3 bis 3,0%
Ti von 0,02 bis 0,2%
B von 0,002 bis 0,015%.

11. Verfahren zum einseitigen Schweißen von gekrümmten Stahlplatten nach Anspruch 8, bei dem mindestens der Draht (wa1) der vorderen Elektrode mit einem ersten Schutzgas und einem zweiten Schutzgas doppelt abgeschirmt ist.

## Revendications

1. Appareil pour soudage unilatéral d'une rainure (b) formée entre deux éléments courbes (W1, W2) à souder ensemble, en particulier des plaques d'acier courbes, qui sont disposés de manière à ce que leurs tranches se faisant face soient en butée l'une contre l'autre, comprenant :
un chariot roulant X (Y1, Yz, RY, Y2) se déplaçant dans une direction horizontale X et pourvu d'un moteur de déplacement X (M1) qui est actionné en réponse à une commande d'alimentation X ;
un chariot roulant Y (4) se déplaçant dans une direction horizontale Y qui est perpendiculaire à la direction X relative au chariot roulant X, le chariot roulant Y étant supporté par le chariot roulant X (Y1, Yz, RY, Y2) et pourvu d'un moteur de déplacement Y (M2) qui est actionné en réponse à une commande d'alimentation Y ;
une base (2) supportée sur le chariot roulant Y de manière à pouvoir s'élever dans la direction verticale Z et tourner autour de l'axe vertical Z (0) ;
un mécanisme élévateur Z (12) comprenant un moteur élévateur (M4) qui est actionné en réponse à une commande d'alimentation Z pour entraîner la base (2) dans un mouvement d'ascension dans la direction verticale Z ;
un mécanisme tournant θ (10) comprenant un premier moteur de rotation (M3) qui est actionné en réponse à une commande d'alimentation θ pour entraîner la base (2) dans une rotation autour de l'axe vertical Z (0) ;
des moyens de détection (P2, P3) supportés par la base (2) pour détecter tant la position sur l'axe des Z que la position horizontale de la rainure (b) par rapport à la base ; et
une torche de soudage (30L, 30T) supporté par la base pour souder la rainure (b),
**caractérisé en ce que**
lesdits moyens de détection comprennent un premier moyen de détection (P3) situé sur un prolongement de l'axe (0) représentant le centre de rotation de ladite base (2) et un deuxième moyen de détection (P2) espacé à une distance donnée de l'axe (0) représentant le centre de rotation de ladite base (2) ; et
ledit appareil comprend en outre des moyens de contrôle (8) pour calculer l'angle de courbure θ' de la rainure (b) entre les éléments à souder (W1, W2), mesuré dans une direction transversale par rapport à la direction d'extension de la rainure, et l'angle d'inclinaison α de la direction d'extension de la rainure par rapport au plan horizontal, à partir des valeurs de détection détectées par les premier et deuxième moyens de détection (P2, P3), les moyens de contrôle (8) provoquant l'entraînement par ledit mécanisme tournant θ (10) de la base (2) dans un mouvement de rotation en fonction de l'angle de courbure θ' et l'entraînement par ledit mécanisme élévateur Z (12) de la base (2) dans un mouvement d'ascension en fonction de l'angle d'inclinaison α.

2. Appareil de soudage unilatéral pour plaques d'acier courbes selon la revendication 1, comprenant en outre
un bâti support de torche (3) supporté par la base (2) de manière à pouvoir tourner autour de l'axe horizontal X, pour soutenir une torche de soudage (30L, 30T) ; et
un mécanisme de rotation γ comprenant un second moteur de rotation (M7) qui est actionné en réponse à une commande d'alimentation γ pour entraîner le bâti support de torche (3) dans une rotation autour de l'axe horizontal (31a).

3. Appareil de soudage unilatéral pour plaques d'acier courbes selon la revendication 2, comprenant en outre des moyens de contrôle (8) pour calculer l'angle de courbure θ' de la rainure (b) formée entre les éléments à souder (W1, W2), mesuré dans une direction transversale par rapport à la direction d'extension de la rainure, et l'angle d'inclinaison α de la direction d'extension de la rainure par rapport au plan horizontal, à partir des valeurs de détection provenant des premier et deuxième moyens de détection (P2, P3), les moyens de contrôle (8) provoquant l'entraînement par ledit mécanisme tournant θ (10) de la base (2) dans un mouvement de rotation en fonction de l'angle de courbure θ' et l'entraînement par ledit mécanisme élévateur Z (12) de la base dans un mouvement d'ascension en fonction de l'angle d'inclinaison α.

4. Appareil de soudage unilatéral pour plaques d'acier courbes selon la revendication 2, dans lequel le bâti support de torche (3) soutient la torche de soudage (30L, 30T) de manière à ce qu'il puisse s'approcher ou s'éloigner de l'élément à souder et comprend en outre
un mécanisme de hausse et baisse de torche comprenant un moteur de hausse et baisse de torche (M8, M 10) qui est actionné en réponse à une commande d'alimentation de rapprochement et d'éloignement pour entraîner la torche de soudage (30L, 30T) dans un mouvement de rapprochement et d'éloignement de l'élément (W1, W2) à souder.

5. Appareil de soudage unilatéral pour plaques d'acier courbes selon la revendication 4, comprenant en outre des moyens de contrôle (8) pour calculer l'angle de courbure θ' de la rainure (b) formée entre les éléments à souder (W1, W2), mesuré dans une direction transversale par rapport à la direction d'extension de la rainure (b), et l'angle d'inclinaison α de la direction d'extension de la rainure (b) par rapport au plan horizontal, à partir des valeurs de détection provenant des premier et deuxième moyens de détection (P2, P3), les moyens de contrôle (8) provoquant l'entraînement par le mécanisme tournant θ (10) de la base (2) dans un mouvement de rotation en fonction de l'angle de courbure θ', provoquant l'entraînement par le mécanisme élévateur Z (12) de la base (2) dans un mouvement d'ascension en fonction de l'angle d'inclinaison α et provoquant l'entraînement de la torche de soudage (30L, 30T) par le mécanisme de hausse et baisse de la torche dans un mouvement de rapprochement et d'éloignement de l'élément à souder en fonction de l'angle d'inclinaison α.

6. Appareil de soudage unilatéral pour plaques d'acier courbes selon la revendication 2, dans lequel le bâti support de torche (3) soutient la torche de soudage (30L, 30T) de manière à ce qu'il puisse effectuer un mouvement de va-et-vient par rapport aux éléments (W1, W2) à souder, ce dans une direction qui est perpendiculaire à la ligne longitudinale qui relie les premier et deuxième moyens de détection (P3, P2), l'appareil comprenant en outre
un troisième moyen de détection (P5) et un quatrième moyen de détection (P4) supportés par la base (2), séparés l'un de l'autre dans une direction perpendiculaire à la ligne longitudinale et détectant chacun une position Z de la surface du premier et du second élément (W1, W2) à souder ensemble et délimitant entre eux la rainure (b) ; et
un mécanisme oscillant comprenant un moteur d'oscillation (M9, M11) qui est actionné en réponse à une commande d'alimentation d'oscillation pour entraîner la torche de soudage (30L, 30T) dans un mouvement de va-et-vient.

7. Appareil de soudage unilatéral pour plaques d'acier courbes selon la revendication 6, comprenant en outre des moyens de contrôle (8) pour calculer l'angle de courbure θ' de la rainure (b) formée entre les éléments à souder (W1, W2), mesuré dans une direction transversale par rapport à la direction d'extension de la rainure (b), et l'angle d'inclinaison α de la direction d'extension de la rainure (b) par rapport au plan horizontal, à partir des valeurs de détection provenant des premier et deuxième moyens de détection (P2, P3), les moyens de contrôle (8) provoquant l'entraînement par le mécanisme tournant θ (10) de la base (2) dans un mouvement de rotation en fonction de l'angle de courbure θ' et l'entraînement par le mécanisme élévateur Z (12) de la base (2) dans un mouvement d'ascension en fonction de l'angle d'inclinaison α, les moyens de contrôle (8) calculant aussi l'angle d'inclinaison β que forme l'élément (W1, W2) à souder par rapport au plan horizontal, vu dans une direction perpendiculaire à la direction d'extension de la rainure (b), à partir des valeurs de détection provenant du troisième et du quatrième moyen de détection (P5, P4), pour déplacer le centre d'excursion du mouvement oscillatoire de va-et-vient auquel est soumis la torche de soudage (30L, 30T) sous l'effet du mécanisme oscillant en fonction de l'angle d'inclinaison β.

8. Procédé de soudage unilatéral d'une rainure (b) formée entre des plaques d'acier courbes (W1, W2) à souder ensemble, qui sont disposées de manière à ce que leurs tranches se faisant face soient en butée l'une contre l'autre, au moyen d'une paire de torches de soudage à l'arc sous flux gazeux (30L, 30T), utilisant un appareil de soudage unilatéral selon l'une quelconque des revendications précédentes et comprenant les étapes de :
choix d'un angle de rainure pour la rainure en forme de V ou de Y formée entre les plaques d'acier courbes (W1, W2) à souder, angle compris entre 30° et 65°, avec une soudure de pointage appliquée à travers les surfaces intérieures de la rainure ;
application d'un soutien (BP) sur la surface postérieure de la rainure (b) et remplissage de la rainure avec des particules d'acier ou de la poudre de fer jusqu'à une hauteur comprise entre un quart et deux tiers de l'épaisseur de la plaque ;
choix d'un écartement inter - électrodes entre les fils d'électrode (wal, wa2) de la paire de torches de soudage à l'arc sous flux gazeux (30L, 30T), écartement compris entre 100 mm et 600 mm ;
choix d'une densité de courant de soudage, supérieure ou égale à 200 A/mm² pour le fil d'électrode de tête (wa1) et supérieure ou égale à 150 A/mm² pour le fil d'électrode suiveur (wa2) ; et
mise en oscillation du fil d'électrode de tête (wa1) à une fréquence comprise entre 40 et 150 cycles par minute et du fil d'électrode suiveur (wa2) à une fréquence comprise entre 30 et moins de 120 cycles par minute.

9. Procédé de soudage unilatéral de plaques d'acier courbes selon la revendication 8, dans lequel le fil d'électrode de tête (wa1) comprend un fil fourré de flux, rempli d'un flux qui comprend, en pourcentage en poids rapporté au poids total du fil, les matériaux suivants :
TiO₂ : de 2,5 à 7,0 %
ZrO₂ :de 0,4 à 1,0 %
Al₂O₂ : de 0,1 à 1,0 %
Si: de 0,2 à 1,2 %
Mn : de 1,0 à 4,0 %
Mg: de 0,1 à 1,0 % le flux comprenant en outre un ou plusieurs des éléments Na et K dans une quantité totale allant de 0,03 à 0,3 %.

10. Procédé de soudage unilatéral de plaques d'acier courbes selon la revendication 9, dans lequel le fil d'électrode suiveur (wa2) comprend un fil fourré de flux, rempli d'un flux comprenant en outre, en pourcentage en poids rapporté au poids total du fil, les matériaux suivants :
Ni : de 0,3 à 3,0 %
Ti : de 0,02 à 0,2 %
B: de 0,002 à 0,015 %.

11. Procédé de soudage unilatéral de plaques d'acier courbes selon la revendication 8, dans lequel au moins le fil d'électrode de tête (wa1) est doublement protégé par un premier flux gazeux et un second flux gazeux.
